(19) Europäisches Patentamt
European Patent Office
Office européen des brevets

(11) **EP 3 073 658 B1**

(12) **EUROPEAN PATENT SPECIFICATION**

(45) Date of publication and mention
of the grant of the patent:
**06.11.2019 Bulletin 2019/45**

(21) Application number: **14863934.7**

(22) Date of filing: **21.11.2014**

(51) Int Cl.:
$H04L\ 5/00$ (2006.01)   $H04W\ 4/70$ (2018.01)
$H04L\ 27/26$ (2006.01)

(86) International application number:
**PCT/KR2014/011277**

(87) International publication number:
**WO 2015/076619 (28.05.2015 Gazette 2015/21)**

(54) **METHOD FOR RECEIVING BUNDLE OF PDCCH, AND MTC DEVICE**

VERFAHREN ZUM EMPFANGEN EINES PDCCH-BÜNDELS UND MTC-VORRICHTUNG

PROCÉDÉ DE RÉCEPTION D'UN GROUPE DE PDCCH, ET DISPOSITIF DE MTC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2013 US 201361907400 P
29.11.2013 US 201361910130 P
10.12.2013 US 201361914359 P
23.01.2014 US 201461930483 P
29.01.2014 US 201461932809 P**

(43) Date of publication of application:
**28.09.2016 Bulletin 2016/39**

(73) Proprietor: **LG Electronics Inc.
Seoul 150-721 (KR)**

(72) Inventors:
• **YOU, Hyangsun**
**Seoul 137-893 (KR)**
• **YI, Yunjung**
**Seoul 137-893 (KR)**
• **AHN, Joonkui**
**Seoul 137-893 (KR)**
• **SEO, Dongyoun**
**Seoul 137-893 (KR)**
• **YANG, Suckchel**
**Seoul 137-893 (KR)**

(74) Representative: **Katérle, Axel
Wuesthoff & Wuesthoff
Patentanwälte PartG mbB
Schweigerstraße 2
81541 München (DE)**

(56) References cited:
**EP-A1- 2 919 402     WO-A1-2013/081376
US-A1- 2013 114 537     US-A1- 2013 272 148**

• HUAWEI ET AL: "Discussion on (E)PDCCH and PUCCH coverage improvement for MTC UEs", 3GPP DRAFT; R1-135021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734724, Retrieved from the Internet: URL:http://www.3gpp.org/ftp/Meetings_3GPP_ SYNC/RAN/RAN1/Docs/ [retrieved on 2013-11-13]
• FUJITSU: "(e)PDCCH Support for Coverage Deficit MTC Devices", 3GPP DRAFT; R1-135132 (E)PDCCH SUPPORT FOR COVERAGE DEFICIT MTC DEVICES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. San Francisco, USA; 20131111 - 20131115 13 November 2013 (2013-11-13), XP050734834, Retrieved from the Internet: URL:http://www.3gpp.org/ftp/Meetings_3GPP_ SYNC/RAN/RAN1/Docs/ [retrieved on 2013-11-13]

- CATT: "(E)PDCCH coverage improvement for MTC UEs", 3GPP DRAFT; R1-135066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734769, Retrieved from the Internet: URL:http://www.3gpp.org/ftp/Meetings_3GPP_SYNC/RAN/RAN1/Docs/ [retrieved on 2013-11-13]
- LG ELECTRONICS: 'PDCCH coverage enhancement for MTC' R1-134395, 3GPP TSG RAN WG1 #74BIS 28 September 2013, GUANGZHOU, CHINA, XP050717520
- HUAWEI ET AL.: 'Finalization of EPDCCH search space function and text proposal''.' R1-130006, 3GPP TSG RAN WG1 #72 19 January 2013, ST. JULIAN'S, MALTA, XP050663488
- MOTOROLA MOBILITY: "MTC Coverage improvement for Control Channels", 3GPP DRAFT; R1-135674, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco; 20131111 - 20131115 13 November 2013 (2013-11-13), XP050735329, Retrieved from the Internet: URL:http://www.3gpp.org/ftp/Meetings_3GPP_SYNC/RAN/RAN1/Docs/ [retrieved on 2013-11-13]
- LG ELECTRONICS: "PDCCH transmission for MTC coverage enhancement", 3GPP DRAFT; R1-135461 MTC_CE FOR PDCCH (FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735134, Retrieved from the Internet: URL:http://www.3gpp.org/ftp/Meetings_3GPP_SYNC/RAN/RAN1/Docs/ [retrieved on 2013-11-13]
- LG ELECTRONICS: "PDSCH/PUSCH transmission for MTC coverage enhancement", 3GPP DRAFT; R1-135462 MTC_CE FOR PDSCH (FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735135, Retrieved from the Internet: URL:http://www.3gpp.org/ftp/Meetings_3GPP_SYNC/RAN/RAN1/Docs/ [retrieved on 2013-11-13]

**Description**

**BACKGROUND OF THE INVENTION**

Field of the invention

The present invention relates to mobile communication.

Related Art

3GPP (3rd Generation Partnership Project) LTE (Long Term Evolution) that is an advancement of UMTS (Universal Mobile Telecommunication System) is being introduced with 3GPP release 8. In 3GPP LTE, OFDMA (orthogonal frequency division multiple access) is used for downlink, and SC-FDMA (single carrier-frequency division multiple access) is used for uplink. The 3GPP LTE adopts MIMO (multiple input multiple output) having maximum four antennas. Recently, a discussion of 3GPP LTE-A (LTE-Advanced) which is the evolution of the 3GPP LTE is in progress.

As set forth in 3GPP TS 36.211 V10.4.0, the physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

Meanwhile, in recent years, communication, i.e., machine type communication (MTC), occurring between devices or between a device and a server without a human interaction, i.e., a human intervention, is actively under research. The MTC refers to the concept of communication based on an existing wireless communication network used by a machine device instead of a user equipment (UE) used by a user.

Since the MTC has a feature different from that of a normal UE, a service optimized to the MTC may differ from a service optimized to human-to-human communication. In comparison with a current mobile network communication service, the MTC can be characterized as a different market scenario, data communication, less costs and efforts, a potentially great number of MTC apparatuses, wide service areas, low traffic for each MTC apparatus, etc.

Recently, it is considered to extend cell coverage of a BS for an MTC apparatus, and various schemes for extending the cell coverage are under discussion. However, when the cell coverage is extended, if the BS transmits a channel to the MTC apparatus located in the coverage extension region as if transmitting a channel to a normal UE, the MTC apparatus has a difficulty in receiving the channel.

Further, as the MTC apparatus is expected to have low performance in order to supply more MTC apparatuses at a low price, if the BS transmits a PDCCH or a PDSCH to the MTC apparatus located in the coverage extension region as if transmitting a PDCCH or a PDSCH to a normal UE, the MTC apparatus has a difficulty in receiving the PDCCH or the PDSCH.

EP 2 919 402 A1 describes a base station for repeatedly transmitting a physical downlink control channel (PDCCH) during a first subframe bundle comprising a plurality of subframes, and transmitting a PDSCH related to the PDCCH. The PDSCH is described to be transmitted to a user equipment starting from subframe n+k, which is the kth subframe after the last subframe n-1 in the first subframe bundle, wherein k is an integer bigger than 0. The first subframe bundle is described to begin from a predetermined or fixed position.

The document "Discussion on (E)PDCCH and PUCCH coverage improvement for MTC UEs", 3GPP DRAFT, R1-135021, XP050734724, describes a method for PDCCH and PUCCH coverage improvement for MTS UEs. In the document a PDCCH scheduling for UE-specific data and adoption of repetition of PDCCH across multiple subframes are described.

The document "(e)PDCCH Support for Coverage Deficit MTC Devices", 3GPP DRAFT, R1-135132, XP050734834, describes the impact of a repetition applied to (E)PDCCH decoding and a method to optimize blind decoding of (E)PDCCH repetitions for MTC UEs.

The document "(E)PDCCH coverage improvement for MTC UEs", 3GPP DRAFT, R1-135066, XP050734769, describes the impact of a repetition of (E)PDCCH when MTC UEs perform blind decoding.

The document "MTC Coverage improvement for Control Channels", 3GPP DRAFT, R1-135674, XP050735329, describes utilization of a PDSCH region of a subframe in DL control channel transmission for enhanced coverage MTC UEs.

The document "PDCCH transmission for MTC coverage enhancement", 3GPP DRAFT, R1-135461, XP050735134, describes required information for PDCCH repetition and evaluation results on PDCCH repetition with higher aggregation level with respect to PDCCH coverage enhancement for MTC UE.

The document "PDSCH/PUSCH transmission for MTC coverage enhancement", 3GPP DRAFT, R1-135462, XP050735135, describes an available subframe for composition of a PDSCH/PUSCH bundle to be determined and a timing offset between PDCCH and PDSCH bundle.

## SUMMARY OF THE INVENTION

Accordingly, the disclosure of the specification has been made in an effort to solve the problem. The invention is defined by the appended claims. All embodiments not falling under the scope of the appended claims are to be considered merely as examples suitable for understanding the invention.

In order to achieve the aforementioned purpose, a first disclosure of the present specification allows a base station to be able to repetitively transmit a physical downlink shared channel (PDCCH) or a physical downlink shared channel (PDSCH) on several subframes (i.e., bundle transmission), when a machine type communication (MTC) device is located in a coverage extension region of the base station.

Meanwhile, in order to achieve the aforementioned purpose, another disclosure of the present specification provides a method for receiving a physical downlink shared channel (PDCCH). The method may be performed by a machine type communication (MTC) device and comprise: when it may be required to receive a PDCCH bundle in which a same PDCCH is repeated on N subframes, determining a first search space for receiving the PDCCH in a first subframe among the N subframes; and determining a second search space for receiving the PDCCH on a second subframe among the N subframes. Here, the first and the second search spaces may comprise a plurality of control channel elements (CCE). Also, a CCE position in the first search space may be kept the same in the second search space.

The CCE position in the first search space may be kept the same without being changed during a specific duration.

The specific duration may be N subframes in which the PDCCH bundle may be received, or a system frame duration.

When a repetition level related to a repetition number of the identical PDCCH may be decreased by one level, a period in which reception of the PDCCH bundle can start may be decreased by half.

The number N of subframes in which the PDCCH bundle may be received varies depending on an aggregation level of the PDCCH.

When the aggregation level of the PDCCH may be increased by one level, the number N of subframes in which the PDCCH bundle may be received may be decreased by half.

Further, in order to achieve the aforementioned purpose, another disclosure of the present specification provides a machine type communication (MTC) device for receiving a physical downlink shared channel (PDCCH). The MTC device may comprise: a radio frequency (RF) unit; and a processor for determining a first search space for receiving the PDCCH in a first subframe among the N subframes via the RF unit when it may be required to receive a PDCCH bundle in which an identical PDCCH may be repeated on N subframes, and determining a second search space for receiving the PDCCH on a second subframe among the N subframes. Here, the first and the second search spaces comprise a plurality of control channel elements (CCE). Also, a CCE position in the first search space may be kept the same in the second search space.

According to a disclosure of the present specification, the aforementioned problem of the conventional problem can be solved. More specifically, according to the disclosure of the present specification, reception capability and decoding capability of a machine type communication (MTC) device located in a coverage extension region of a base station can be improved.

## BRIEF DESCRIPTION OF THE DRAWINGS

FIG. 1 illustrates a wireless communication system.

FIG. 2 illustrates the architecture of a radio frame according to frequency division duplex (FDD) of 3rd generation partnership project (3GPP) long term evolution (LTE).

FIG. 3 illustrates the architecture of a downlink radio frame according to time division duplex (TDD) in 3GPP LTE.

FIG. 4 illustrates an example resource grid for one uplink or downlink slot in 3GPP LTE.

FIG. 5 illustrates the architecture of a downlink subframe.

FIG. 6 illustrates an example of resource mapping of a physical downlink shared channel (PDCCH).

FIG. 7 illustrates an example of monitoring of a PDCCH.

FIG. 8 illustrates the architecture of an uplink (UL) sub-frame in 3GPP LTE.

FIG. 9a illustrates an example of machine type communication (MTC).

FIG. 9b illustrates an example of cell coverage extension for an MTC device.

FIG. 10a and FIG. 10b illustrate an example in which a PDCCH bundle and a PDSCH bundle are transmitted.

FIG. 11 illustrates an example of changing a subframe pattern capable of transmitting a PDCCH bundle.

FIG. 12 illustrates an example in which a PDCCH repetition number varies depending on a PDCCH aggregation level.

FIG. 13 illustrates an example in which a transmission start position varies depending on a PDCCH repetition number.

FIG. 14 illustrates an example of a position of a subframe in which transmission of each of a PDCCH bundle and a physical downlink shared channel (PDSCH) bundle starts.

FIG. 15a illustrates an example in which a PDSCH bundle transmission starting position is identical irrespective of a real PDCCH transmission number. FIG. 15b illustrates an example in which a PDSCH bundle transmission starting position varies depending on a real PDCCH transmission number.

FIG. 16 illustrates an example in which PDCCH bundle transmission is changed variously according to an aggregation level.

FIG. 17 illustrates an example in which a PDCCH bundle transmission starting subframe position varies for each MTC device.

FIG. 18 illustrates an example in which a region of subframes in which a PDCCH bundle can be transmitted varies depending on a PDCCH aggregation level.

FIG. 19a and FIG. 19b illustrate an example in which a PDSCH bundle transmission position varies depending on a PDCCH bundle transmission position.

FIG. 20 illustrates an example in which a configuration of a PDCCH bundle transmission subframe is changed according to an aggregation level.

FIG. 21 illustrates an example in which a position of a control channel element (CCE) is kept the same during a subframe duration in which a PDCCH bundle is transmitted.

FIG. 22 illustrates an example in which a value $Y_k$ for determining a search space is equally used in a situation where a PDCCH bundle is transmitted on a subframe with a specific interval.

FIG. 23a and FIG. 23b illustrate examples in which a set of a CCE index of a candidate m is determined differently according to a PDCCH aggregation level.

FIG. 24 is a block diagram of a wireless communication system according to a disclosure of the present specification.

## DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the general terms used herein should be interpreted in the context as defined in the dictionary, but not in an excessively narrowed manner.

The expression of the singular number in the present invention includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present invention, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the scope of the invention readily understood, but not should be intended to be limiting of the invention.

As used herein, 'base station' generally refers to a fixed station that communicates with a wireless device and may be denoted by other terms such as eNB (evolved-NodeB), BTS (base transceiver system), or access point.

As used herein, 'user equipment (UE)' may be stationary or mobile, and may be denoted by other terms such as device, wireless device, terminal, MS (mobile station), UT (user terminal), SS (subscriber station), MT (mobile terminal) and etc.

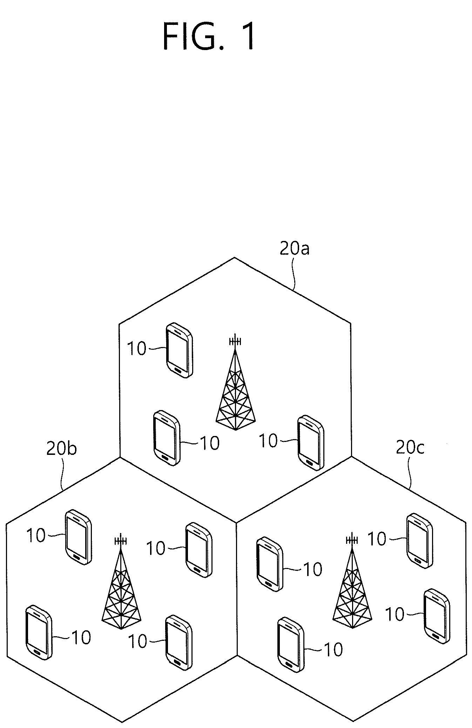

**FIG. 1 illustrates a wireless communication system.**

As seen with reference to FIG. 1, the wireless communication system includes at least one base station (BS) 20. Each base station 20 provides a communication service to specific geographical areas (generally, referred to as cells) 20a, 20b, and 20c. The cell can be further divided into a plurality of areas (sectors).

The UE generally belongs to one cell and the cell to which the UE belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UE1 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Meanwhile, the wireless communication system may be generally divided into a frequency division duplex (FDD) type and a time division duplex (TDD) type. According to the FDD type, uplink transmission and downlink transmission are achieved while occupying different frequency bands. According to the TDD type, the uplink transmission and the downlink transmission are achieved at different time while occupying the same frequency band. A channel response of the TDD type is substantially reciprocal. This means that a downlink channel response and an uplink channel response are approximately the same as each other in a given frequency area. Accordingly, in the TDD based wireless communication system, the downlink channel response may be acquired from the uplink channel response. In the TDD type, since an entire frequency band is time-divided in the uplink transmission and the downlink transmission, the downlink transmission by the base station and the uplink transmission by the terminal may not be performed simultaneously. In the TDD system in which the uplink transmission and the downlink transmission are divided by the unit of a sub-frame, the uplink transmission and the downlink transmission are performed in different sub-frames.

Hereinafter, the LTE system will be described in detail.

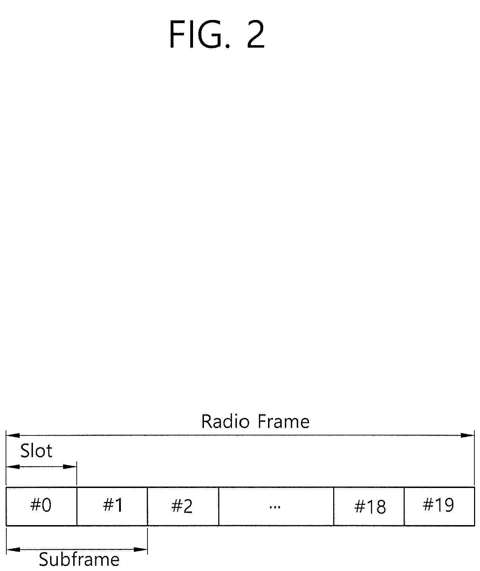

**FIG. 2 shows a downlink radio frame structure according to FDD of 3rd generation partnership project (3GPP) long term evolution (LTE).**

The radio frame of FIG. 2 may be found in the section 5 of 3GPP TS 36.211 V10.4.0 (2011-12) "Evolved Universal Terrestrial Radio Access (E-UTRA); Physical Channels and Modulation (Release 10)".

The radio frame includes 10 sub-frames indexed 0 to 9. One sub-frame includes two consecutive slots. Accordingly, the radio frame includes 20 slots. The time taken for one sub-frame to be transmitted is denoted TTI (transmission time interval). For example, the length of one sub-frame may be 1ms, and the length of one slot may be 0.5ms.

The structure of the radio frame is for exemplary purposes only, and thus the number of sub-frames included in the radio frame or the number of slots included in the sub-frame may change variously.

Meanwhile, one slot may include a plurality of orthogonal frequency division multiplexing (OFDM) symbols. The number of OFDM symbols included in one slot may vary depending on a cyclic prefix (CP). One slot includes 7 OFDM symbols in case of a normal CP, and one slot includes 6 OFDM symbols in case of an extended CP. Herein, since the 3GPP LTE uses orthogonal frequency division multiple access (OFDMA) in a downlink (DL), the OFDM symbol is only for expressing one symbol period in a time domain, and there is no limitation in a multiple access scheme or terminologies. For example, the OFDM symbol may also be referred to as another terminology such as a single carrier frequency division multiple access (SC-FDMA) symbol, a symbol period, etc.

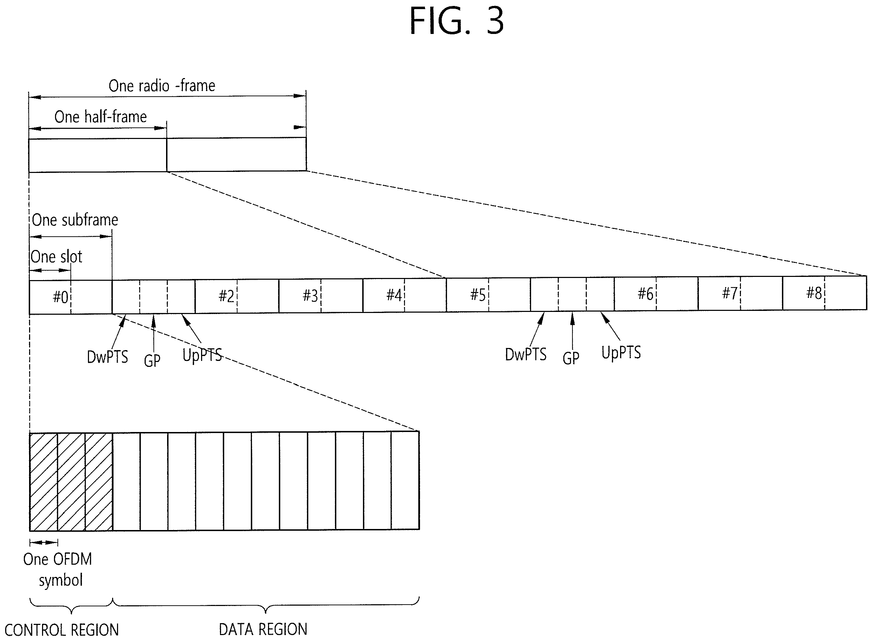

**FIG. 3 illustrates the architecture of a downlink radio frame according to TDD in 3GPP LTE.**

For this, 3GPP TS 36.211 V10.4.0 (2011-12) "Evolved Universal Terrestrial Radio Access (E-UTRA); Physical Channels and Modulation (Release 8)", Ch. 4 may be referenced, and this is for TDD (time division duplex).

Sub-frames having index #1 and index #6 are denoted special sub-frames, and include a DwPTS(Downlink Pilot Time Slot: DwPTS), a GP(Guard Period) and an UpPTS(Uplink Pilot Time Slot). The DwPTS is used for initial cell search, synchronization, or channel estimation in a terminal. The UpPTS is used for channel estimation in the base station and for establishing uplink transmission sync of the terminal. The GP is a period for removing interference that arises on uplink due to a multi-path delay of a downlink signal between uplink and downlink.

In TDD, a DL (downlink) sub-frame and a UL (Uplink) co-exist in one radio frame. Table 1 shows an example of configuration of a radio frame.

**[Table 1]**

| UL-DL configuration | Switch-point periodicity | Subframe index | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

'D' denotes a DL sub-frame, 'U' a UL sub-frame, and 'S' a special sub-frame. When receiving a UL-DL configuration from the base station, the terminal may be aware of whether a sub-frame is a DL sub-frame or a UL sub-frame according to the configuration of the radio frame.

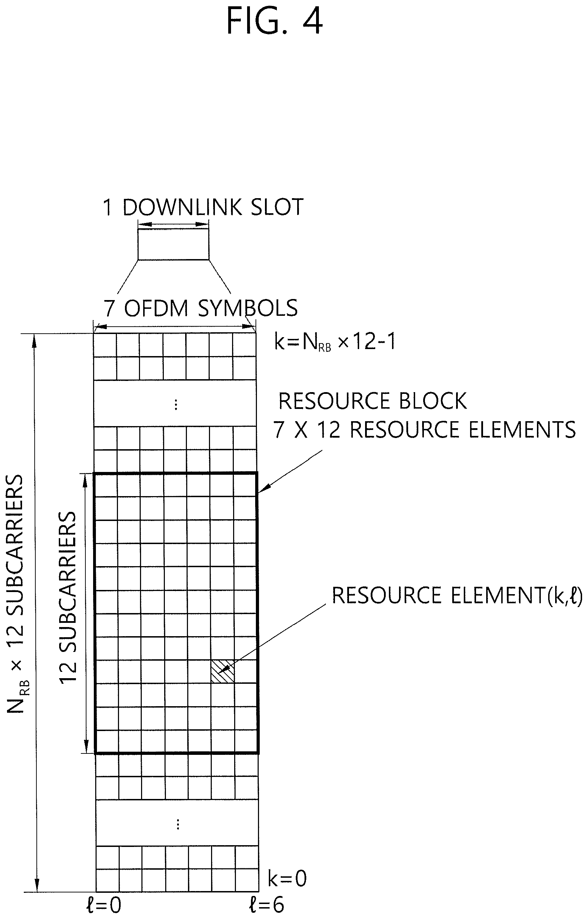

**FIG. 4 illustrates an example resource grid for one uplink or downlink slot in 3GPP LTE.**

Referring to FIG. 4, the uplink slot includes a plurality of OFDM (orthogonal frequency division multiplexing) symbols in the time domain and $N_{RB}$ resource blocks (RBs) in the frequency domain. For example, in the LTE system, the number of resource blocks (RBs), i.e., $N_{RB}$, may be one from 6 to 110.

Resource block (RB) is a resource allocation unit and includes a plurality of sub-carriers in one slot. For example, if one slot includes seven OFDM symbols in the time domain and the resource block includes 12 sub-carriers in the frequency domain, one resource block may include 7x12 resource elements (REs).

Meanwhile, the number of sub-carriers in one OFDM symbol may be one of 128, 256, 512, 1024, 1536, and 2048.

In 3GPP LTE, the resource grid for one uplink slot shown in FIG. 4 may also apply to the resource grid for the downlink slot.

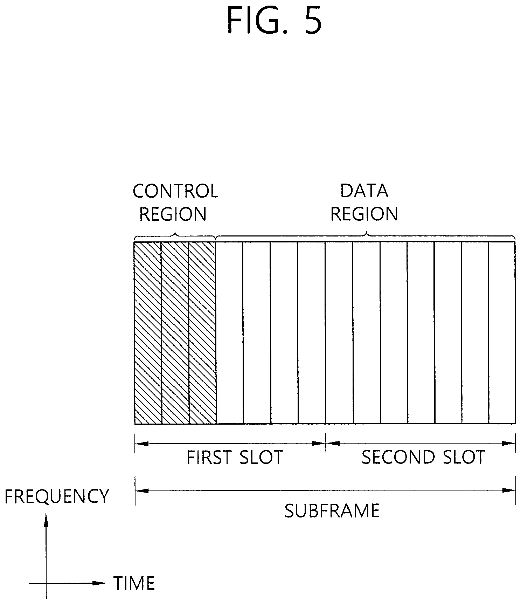

**FIG. 5 illustrates the architecture of a downlink sub-frame.**

In FIG. 5, assuming the normal CP, one slot includes seven OFDM symbols, by way of example.

The DL (downlink) sub-frame is split into a control region and a data region in the time domain. The control region includes up to first three OFDM symbols in the first slot of the sub-frame. However, the number of OFDM symbols included in the control region may be changed. A PDCCH (physical downlink control channel) and other control channels are allocated to the control region, and a PDSCH is allocated to the data region.

The physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

The PCFICH transmitted in the first OFDM symbol of the sub-frame carries CIF (control format indicator) regarding the number (i.e., size of the control region) of OFDM symbols used for transmission of control channels in the sub-frame. The wireless device first receives the CIF on the PCFICH and then monitors the PDCCH.

Unlike the PDCCH, the PCFICH is transmitted through a fixed PCFICH resource in the sub-frame without using blind decoding.

The PHICH carries an ACK (positive-acknowledgement)/NACK (negative-acknowledgement) signal for a UL HARQ (hybrid automatic repeat request). The ACK/NACK signal for UL (uplink) data on the PUSCH transmitted by the wireless device is sent on the PHICH.

The PBCH (physical broadcast channel) is transmitted in the first four OFDM symbols in the second slot of the first sub-frame of the radio frame. The PBCH carries system information necessary for the wireless device to communicate with the base station, and the system information transmitted through the PBCH is denoted MIB (master information block). In comparison, system information transmitted on the PDSCH indicated by the PDCCH is denoted SIB (system information block).

The PDCCH may carry activation of VoIP (voice over internet protocol) and a set of transmission power control commands for individual UEs in some UE group, resource allocation of an upper layer control message such as a random access response transmitted on the PDSCH, system information on DL-SCH, paging information on PCH, resource allocation information of UL-SCH (uplink shared channel), and resource allocation and transmission format of DL-SCH (downlink-shared channel). A plurality of PDCCHs may be sent in the control region, and the terminal may monitor the plurality of PDCCHs. The PDCCH is transmitted on one CCE (control channel element) or aggregation of some consecutive CCEs. The CCE is a logical allocation unit used for providing a coding rate per radio channel's state to the PDCCH. The CCE corresponds to a plurality of resource element groups. Depending on the relationship between the number of CCEs and coding rates provided by the CCEs, the format of the PDCCH and the possible number of PDCCHs are determined.

The control information transmitted through the PDCCH is denoted downlink control information (DCI). The DCI may include resource allocation of PDSCH (this is also referred to as DL (downlink) grant), resource allocation of PUSCH (this is also referred to as UL (uplink) grant), a set of transmission power control commands for individual UEs in some UE group, and/or activation of VoIP (Voice over Internet Protocol).

The base station determines a PDCCH format according to the DCI to be sent to the terminal and adds a CRC (cyclic redundancy check) to control information. The CRC is masked with a unique identifier (RNTI; radio network temporary identifier) depending on the owner or purpose of the PDCCH. In case the PDCCH is for a specific terminal, the terminal's unique identifier, such as C-RNTI (cell-RNTI), may be masked to the CRC. Or, if the PDCCH is for a paging message, a paging indicator, for example, P-RNTI (paging-RNTI) may be masked to the CRC. If the PDCCH is for a system information block (SIB), a system information identifier, SI-RNTI (system information-RNTI), may be masked to the CRC. In order to indicate a random access response that is a response to the terminal's transmission of a random access preamble, an RA-RNTI (random access-RNTI) may be masked to the CRC.

In 3GPP LTE, blind decoding is used for detecting a PDCCH. The blind decoding is a scheme of identifying whether a PDCCH is its own control channel by demasking a desired identifier to the CRC (cyclic redundancy check) of a received PDCCH (this is referred to as candidate PDCCH) and checking a CRC error. The base station determines a PDCCH format according to the DCI to be sent to the wireless device, then adds a CRC to the DCI, and masks a unique identifier (this is referred to as RNTI (radio network temporary identifier) to the CRC depending on the owner or purpose of the PDCCH.

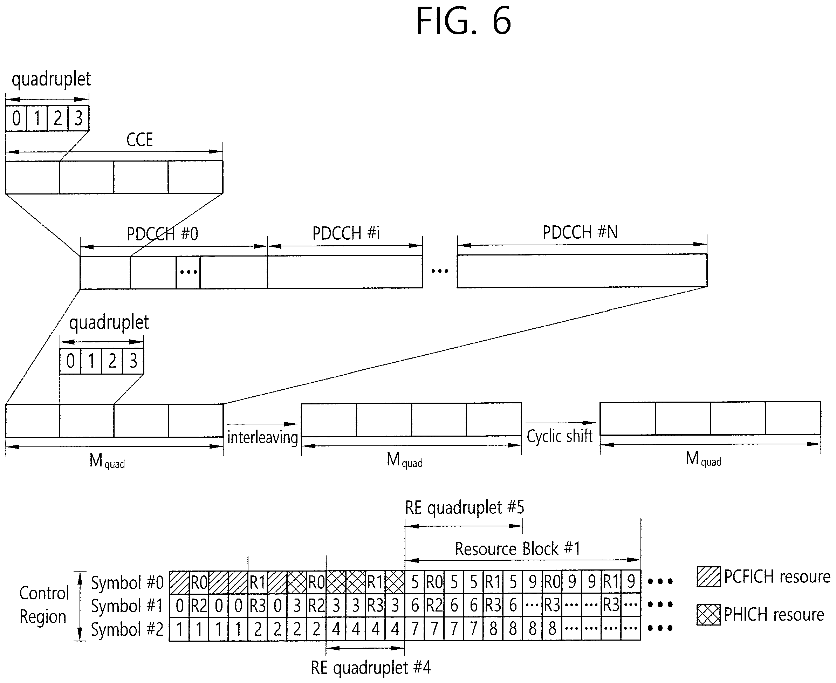

**FIG. 6 illustrates an example of resource mapping of a PDCCH.**

R0 denotes a reference signal of a $1^{st}$ antenna, R1 denotes a reference signal of a $2^{nd}$ antenna, R2 denotes a reference signal of a $3^{rd}$ antenna, and R3 denotes a reference signal of a $4^{th}$ antenna.

A control region in a subframe includes a plurality of control channel elements (CCEs). The CCE is a logical allocation unit used to provide the PDCCH with a coding rate depending on a state of a radio channel, and corresponds to a plurality of resource element groups (REGs). The REG includes a plurality of resource elements (REs). According to the relationship between the number of CCEs and the coding rate provided by the CCEs, a PDCCH format and a possible PDCCH bit number are determined.

A BS determines the number of CCEs used in transmission of the PDCCH according to a channel state. For example, a UE having a good DL channel state may use one CCE in PDCCH transmission. A UE having a poor DL channel state may use 8 CCEs in PDCCH transmission.

One REG (indicated by a quadruplet in the drawing) includes 4 REs. One CCE includes 9 REGs. The number of CCEs used to configure one PDCCH may be selected from {1, 2, 4, 8}. Each element of {1, 2, 4, 8} is referred to as a CCE aggregation level.

A control channel consisting of one or more CCEs performs interleaving in unit of REG, and is mapped to a physical resource after performing cyclic shift based on a cell identifier (ID).

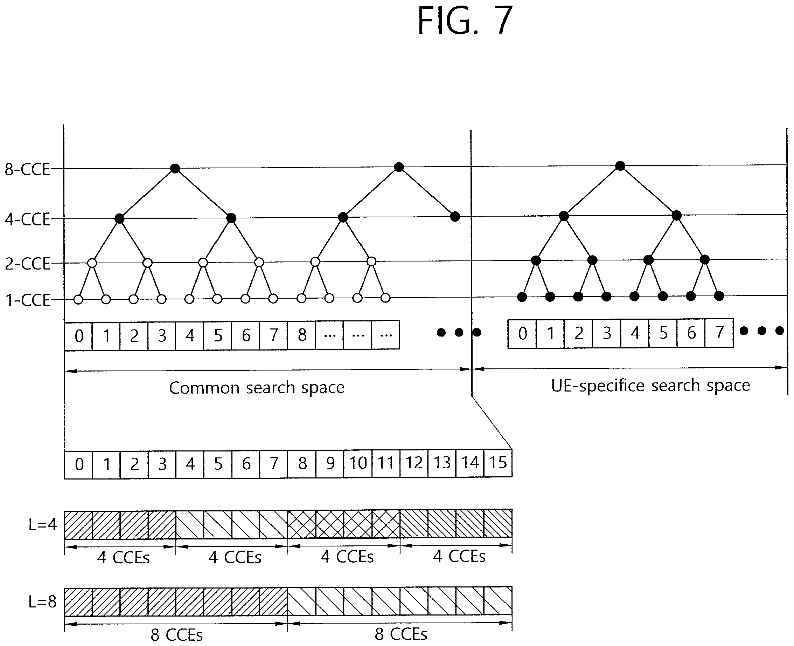

**FIG. 7 illustrates an example of monitoring of a PDCCH.**

A UE cannot know about a specific position in a control region in which its PDCCH is transmitted and about a specific CCE aggregation or DCI format used for transmission. A plurality of PDCCHs can be transmitted in one subframe, and thus the UE monitors the plurality of PDCCHs in every subframe. Herein, monitoring is an operation of attempting PDCCH decoding by the UE according to a PDCCH format.

The 3GPP LTE uses a search space to reduce an overhead of blind decoding. The search space can also be called a monitoring set of a CCE for the PDCCH. The UE monitors the PDCCH in the search space.

The search space is classified into a common search space and a UE-specific search space. The common search space is a space for searching for a PDCCH having common control information and consists of 16 CCEs indexed with 0 to 15. The common search space supports a PDCCH having a CCE aggregation level of {4, 8}. However, a PDCCH (e.g., DCI formats 0, 1A) for carrying UE-specific information can also be transmitted in the common search space. The UE-specific search space supports a PDCCH having a CCE aggregation level of {1, 2, 4, 8}.

Table 2 below shows the number of PDCCH candidates monitored by a wireless device.

**[Table 2]**

| Search space $S^{(L)}_k$ | | | Number $M^{(L)}$ of PDCCH candidates |
|---|---|---|---|
| Type | Aggregation level L | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

A size of the search space is determined by Table 2 above, and a start point of the search space is defined differently in the common search space and the UE-specific search space. Although a start point of the common search space is fixed irrespective of a subframe, a start point of the UE-specific search space may vary in every subframe according to a UE identifier (e.g., C-RNTI), a CCE aggregation level, and/or a slot number in a radio frame. If the start point of the UE-specific search space exists in the common search space, the UE-specific search space and the common search space may overlap with each other.

In a CCE aggregation level L∈{1,2,3,4}, a search space $S^{(L)}_k$ is defined as a set of PDCCH candidates. A CCE corresponding to a PDCCH candidate m of the search space $S^{(L)}_k$ is given by Equation 1 below.

**[Equation 1]**

$$L\left\{(Y_k + m') \bmod \left\lfloor N_{\mathrm{CCE},k}/L \right\rfloor\right\} + i$$

Herein, i=0,1,...,L-1, m=0,...,$M^{(L)}$-1, and $N_{\mathrm{CCE},k}$ denotes the total number of CCEs that can be used for PDCCH transmission in a control region of a subframe k. The control region includes a set of CCEs numbered from 0 to $N_{\mathrm{CCE},k}$-1. $M^{(L)}$ denotes the number of PDCCH candidates in a CCE aggregation level L of a given search space.

If a carrier indicator field (CIF) is configured for the wireless device, m'=m+$M^{(L)}$$n_{\mathrm{cif}}$. Herein, $n_{\mathrm{cif}}$ is a value of the CIF. If the CIF is not configured for the wireless device, m'=m.

In a common search space, $Y_k$ is set to 0 with respect to two aggregation levels L=4 and L=8.

In a UE-specific search space of the aggregation level L, a variable $Y_k$ is defined by Equation 2 below.

**[Equation 2]**

$$Y_k = (A \cdot Y_{k-1}) \bmod D$$

Herein, $Y_{-1}$=$n_{\mathrm{RNTI}}$≠0, A=39827, D=65537, k=floor($n_s$/2), and $n_s$ denotes a slot number in a radio frame.

When the UE monitors the PDCCH by using the C-RNTI, a search space and a DCI format used in monitoring are determined according to a transmission mode of the PDSCH.

Meanwhile, when the UE monitors the PDCCH by using the C-RNTI, a search space and a DCI format used in monitoring are determined according to a transmission mode (TM) of the PDSCH. Table 3 below shows an example of PDCCH monitoring for which the C-RNTI is configured.

**[Table 3]**

| Transmission mode | DCI format | Search space | Transmission mode of PDSCH according to PDCCH |
|---|---|---|---|
| Transmission mode 1 | DCI format 1A | Public service and terminal specific | Single antenna port, port 0 |

9

(continued)

| Transmission mode | DCI format | Search space | Transmission mode of PDSCH according to PDCCH |
|---|---|---|---|
| | DCI format 1 | Terminal specific | Single antenna port, port 0 |
| Transmission mode 2 | DCI format 1A | Public service and terminal specific | Transmit diversity |
| | DCI format 1 | Terminal specific | Transmit diversity |
| Transmission mode 3 | DCI format 1A | Public service and terminal specific | Transmit diversity |
| | DCI format 2A | Terminal specific | CDD(Cyclic Delay Diversity) or transmit diversity |
| Transmission mode 4 | DCI format 1A | Public service and terminal specific | Transmit diversity |
| | DCI format 2 | Terminal specific | Closed-loop spatial multiplexing |
| Transmission mode 5 | DCI format 1A | Public service and terminal specific | Transmit diversity |
| | DCI format 1D | Terminal specific | MU-MIMO(Multi-user Multiple Input Multiple Output) |
| Transmission mode 6 | DCI format 1A | Public service and terminal specific | Transmit diversity |
| | DCI format 1B | Terminal specific | Closed-loop spatial multiplexing |
| Transmission mode 7 | DCI format 1A | Public service and terminal specific | If the number of PBCH transmisison ports is 1, single antenna port, port 0. Otherwise, transmit diversity |
| | DCI format 1 | Terminal specific | Single antenna port, port 5 |
| Transmission mode 8 | DCI format 1A | Public service and terminal specific | If the number of PBCH transmisison ports is 1, single antenna port, port 0. Otherwise, transmit diversity |
| | DCI format 2B | Terminal specific | Dual layer transmisison (port 7 or 8), or single antenna port, port 7 or 8 |
| Transmission mode 9 | DCI format 1A | Public service and terminal specific | Non-MBSFN sub-frame: if the number of PBCH antenna ports is 1, port 0 is used as independent antenna port. Otherwise, transmit Diversity MBSFN sub-frame: port 7 as independent antenna port |

(continued)

| Transmission mode | DCI format | Search space | Transmission mode of PDSCH according to PDCCH |
|---|---|---|---|
| | DCI format 2C | Terminal specific | 8 transmisison layers, ports 7-14 are used or port 7 or 8 is used as independent antenna port |
| Transmission mode 10 | DCI 1A | Public service and terminal specific | Non-MBSFN sub-frame: if the number of PBCH antenna ports is 1, port 0 is used as independent antenna port. Otherwise, transmit Diversity MBSFN sub-frame: port 7 as independent antenna port |
| | DCI format 2D | Terminal specific | 8 transmisison layers, ports 7-14 are used or port 7 or 8 is used as independent antenna port |

The usage of the DCI format is classified as shown in Table 3 below.

**[Table 4]**

| DCI format | Contents |
|---|---|
| DCI format 0 | Used in PUSCH scheduling |
| DCI format 1 | Used in scheduling of one PDSCH codeword |
| DCI format 1A | Used in compact scheduling of one PDSCH codeword and random access process |
| DCI format 1B | Used in compact scheduling of one PDSCH codeword having precoding information |
| DCI format 1C | Used in very compact scheduling of one PDSCH codeword |
| DCI format 1D | Used in precoding and compact scheduling of one PDSCH codeword having power offset information |
| DCI format 2 | Used in PDSCH scheduling of terminals configured in closed-loop spatial multiplexing mode |
| DCI format 2A | Used in PDSCH scheduling of terminals configured in open-loop spatial multiplexing mode |
| DCI format 2B | DCI format 2B is used for resouce allocation for dual-layer beamforming of PDSCH. |
| DCI format 2C | DCI format 2C is used for resouce allocation for closed-loop SU-MIMO or MU-MIMO operation to 8 layers. |
| DCI format 2D | DCI format 2C is used for resouce allocation to 8 layers. |
| DCI format 3 | Used to transmit TPC command of PUCCH and PUSCH having 2 bit power adjustments |
| DCI format 3A | Used to transmit TPC command of PUCCH and PUSCH having 1 bit power adjustment |
| DCI format 4 | Used in PUSCH scheduling of uplink (UP) operated in multi-antenna port transmisison mode |

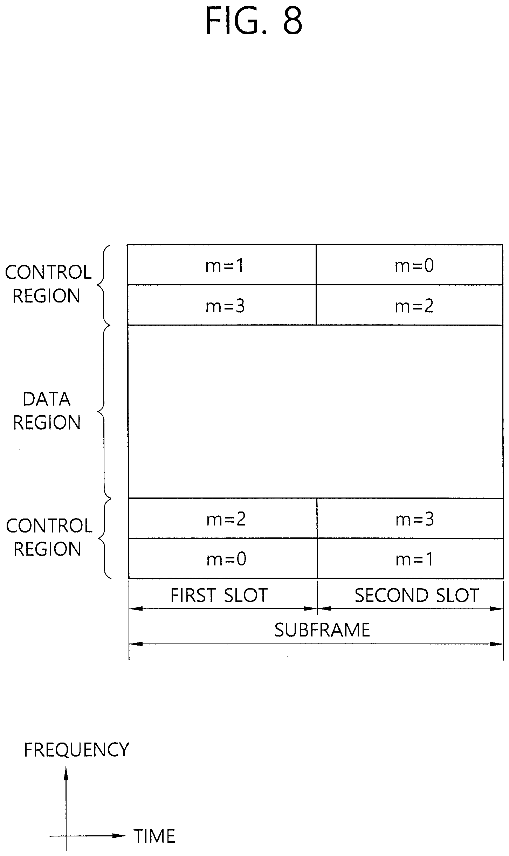

**FIG. 8 illustrates the architecture of a UL sub-frame in 3GPP LTE.**

Referring to FIG. 8, the uplink sub-frame may be separated into a control region and a data region in the frequency domain. The control region is allocated a PUCCH (physical uplink control channel) for transmission of uplink control information. The data region is allocated a PUSCH (physical uplink shared channel) for transmission of data (in some cases, control information may also be transmitted).

The PUCCH for one user equipment is allocated in resource block (RB) pair in the sub-frame. The resource blocks in the resource block pair take up different sub-carriers in each of the first and second slots. The frequency occupied by the resource blocks in the resource block pair allocated to the PUCCH is varied with respect to a slot boundary. This is referred to as the RB pair allocated to the PUCCH having been frequency-hopped at the slot boundary. A frequency diversity gain may be obtained by transmitting uplink control information through different sub-carriers over time.

Since the UE transmits UL control information over time through different subcarriers, a frequency diversity gain can be obtained. In the figure, m is a location index indicating a logical frequency-domain location of the RB pair allocated to the PUCCH in the sub-frame.

Uplink control information transmitted on the PUCCH may include a HARQ ACK/NACK, a channel quality indicator (CQI) indicating the state of a downlink channel, a scheduling request (SR) which is an uplink radio resource allocation request, and the like.

The PUSCH is mapped to a uplink shared channel (UL-SCH), a transport channel. Uplink data transmitted on the PUSCH may be a transport block, a data block for the UL-SCH transmitted during the TTI. The transport block may be user information. Or, the uplink data may be multiplexed data. The multiplexed data may be data obtained by multiplexing the transport block for the UL-SCH and control information. For example, control information multiplexed to data may include a CQI, a precoding matrix indicator (PMI), an HARQ, a rank indicator (RI), or the like. Or the uplink data may include only control information.

A carrier aggregation system is now described.

A carrier aggregation system aggregates a plurality of component carriers (CCs). A meaning of an existing cell is changed according to the above carrier aggregation. According to the carrier aggregation, a cell may signify a combination of a downlink component carrier and an uplink component carrier or an independent downlink component carrier.

Further, the cell in the carrier aggregation may be classified into a primary cell, a secondary cell, and a serving cell. The primary cell signifies a cell operated in a primary frequency. The primary cell signifies a cell which UE performs an initial connection establishment procedure or a connection reestablishment procedure or a cell indcated as a primary cell in a handover procedure. The secondary cell signifies a cell opearting in a secondary frequency. Once the RRC connection is established, the secondary cell is used to provided an additonal radio resouce.

As described above, the carrier aggregation system may support a plurality of component carriers (CCs), that is, a plurality of serving cells unlike a single carrier system.

The carreir aggregation system may support a cross-carrier scheduling. The cross-carrier scheduling is a scheduling method capable of performing resouce allocation of a PDSCH transmitted thrugh other component carrier through a PDCCH transmitted through a specific component carrier and/or resouce allocation of a PUSCH transmitted thrugh other component carrier different from a component carrier basically linked with the sepefic component carrier.

Hereinafter, MTC will be described.

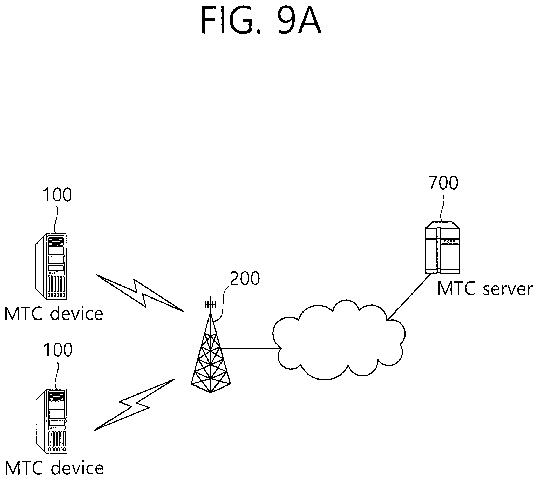

**FIG. 9a illustrates an example of machine type communication (MTC).**

The MTC refers to information exchange performed between MTC devices 100 via a BS 200 without human interactions or information exchange performed between the MTC device 100 and an MTC server 700 via the BS.

The MTC server 700 is an entity for communicating with the MTC device 100. The MTC server 700 executes an MTC application, and provides an MTC-specific service to the MTC device.

The MTC device 100 is a wireless device for providing the MTC, and may be fixed or mobile.

A service provided using the MTC is differentiated from an existing communication service requiring human intervention, and its service range is various, such as tracking, metering, payment, medical field services, remote controlling, etc. More specifically, examples of the service provided using the MTC may include reading a meter, measuring a water level, utilizing a surveillance camera, inventory reporting of a vending machine, etc.

The MTC device is characterized in that a transmission data amount is small and uplink/downlink data transmission/reception occurs sometimes. Therefore, it is effective to decrease a unit cost of the MTC device and to decrease battery consumption according to a low data transmission rate. The MTC device is characterized of having a small mobility, and thus is characterized in that a channel environment does almost not change.

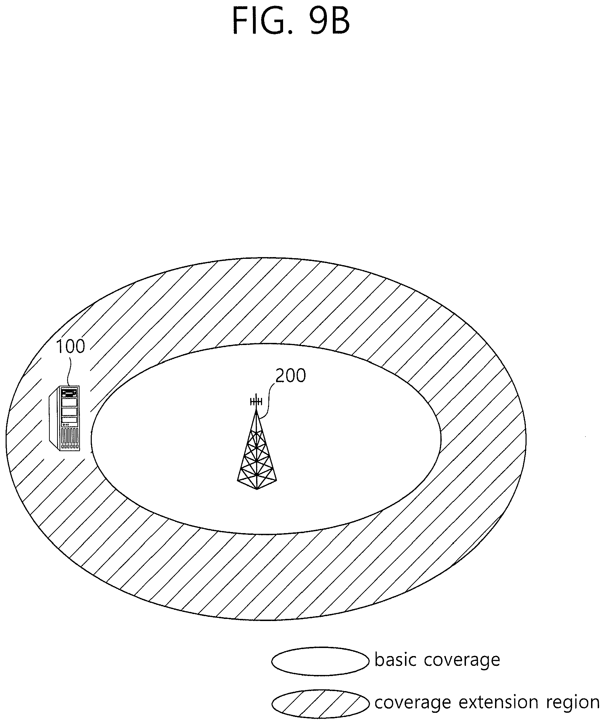

**FIG. 9b illustrates an example of cell coverage extension for an MTC device.**

Recently, it is considered to extend cell coverage of a BS for an MTC device 100, and various schemes for extending the cell coverage are under discussion.

However, when the cell coverage is extended, if the BS transmits a PDSCH and a PDCCH including scheduling information for the PDSCH to the MTC device located in the coverage extension region as if it is transmitted to a normal UE, the MTC device has a difficulty in receiving this.

**<Disclosure of the present specification>**

Accordingly, one disclosure of the present specification aims to provide a method capable of solving the aforementioned problem.

In order to solve the aforementioned problem, one disclosure of the present invention allows to repetitively transmit a PDSCH and a PDCCH on several subframes (e.g., a bundle subframe) when the BS transmits them to the MTC device 100 located in the coverage extension region. Therefore, the MTC device may receive a PDCCH bundle through several subframes, and may increase a decoding success rate by decoding the PDCCH bundle. That is, the PDCCH may be successfully decoded by using some or all of the PDCCH bundles received through the several subframes. In other words, the MTC device may increase the decoding success rate by combining and decoding the PDCCH bundle in which an identical PDCCH is repeated. Likewise, the MTC device may receive a PDSCH bundle through several subframes and decode some or all of the PDSCH bundles, thereby increasing the decoding success rate. Likewise, the MTC device located in the coverage extension region may transmit a PUCCH bundle through several subframes. Likewise, the MTC device may transmit a PUSCH bundle through several subframes.

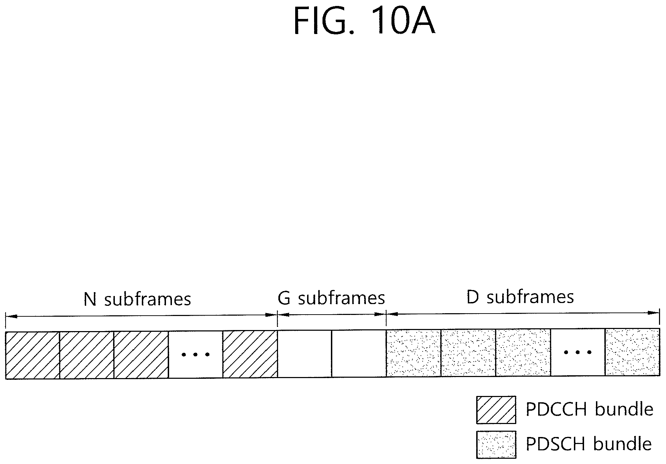

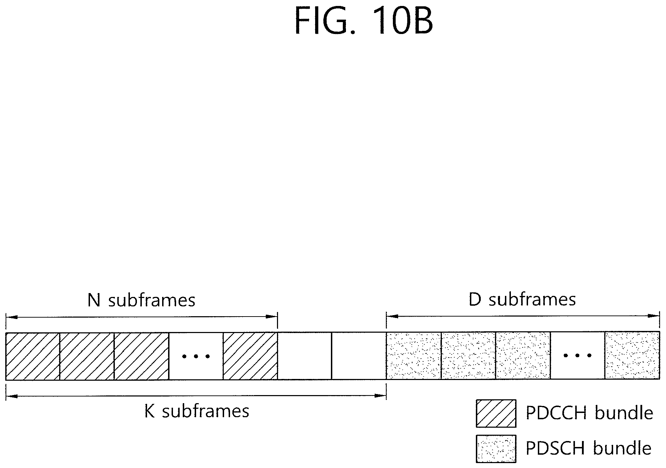

**FIG. 10a and FIG. 10b illustrate an example in which a PDCCH bundle and a PDSCH bundle are transmitted.**

Referring to FIG. 10a, a BS may transmit the PDCCH bundle in which an identical PDCCH is repeated on a plurality of (e.g., N) subframes for an MTC device located in a coverage extension region. Further, the BS may transmit the PDSCH bundle in which an identical PDSCH is repeated on a plurality of (e.g., D) subframes. In this case, the PDSCH bundle may be transmitted with a specific gap, i.e., G subframes later, after transmission of the PDCCH bundle is complete. That is, for example, if the PDCCH bundle transmission is complete on a subframe N-1, the PDSCH bundle may be transmitted on D subframes starting from a subframe N+G. In this case, for example, the values N and D may always be set to the same value. Further, for example, the values G and D may also be equal to each other. Alternatively, the value G may be a value pre-known to the UE, or may be known to the UE through system information, for example, a system information block (SIB). Further, the value D may be set differently or designated differently according to a coverage extension level. Furthermore, the value D may be designated differently according to each PDCCH aggregation level. For example, the value G may be set by considering that a repetition number is different for each aggregation level. Meanwhile, after the PDCCH bundle is received, the MTC device may know that reception of the PDSCH bundle starts after G subframes elapse.

Meanwhile, referring to FIG. 10b, the BS may transmit the PDCCH bundle during N subframes for the MTC device located in the coverage extension region, and may transmit the PDSCH bundle during D subframes after K subframes elapse from the start of the PDCCH bundle. That is, a difference between a subframe position at which transmission of the PDCCH bundle starts and a subframe position at which transmission of the PDSCH bundle starts may be K subframes. In this case, the MTC device needs to know at which subframe the PDCCH bundle starts. For example, if it is defined that 'K = PDSCH bundle transmission starting subframe index - PDCCH bundle transmission starting subframe index', the MTC device can successfully know a time at which PDSCH bundle transmission starts only when it knows a time at which PDCCH bundle transmission starts. In this case, there is an advantage in that the MTC device can know a subframe position at which PDSCH bundle transmission starts even if it does not know the number of subframes in which the PDCCH bundle is transmitted. It may be assumed that the value K is always set to a fixed value. Alternatively, the value K may be set differently according to a coverage extension level. Further, the value L may be set differently according to a coverage extension level. The value K may be set differently according to each PDCCH aggregation level. For example, the value K may be set by considering that a repetition number differs for each aggregation level.

As described above, the subframe position at which PDCCH bundle transmission starts may not be flexible as in the conventional case, and the PDCCH bundle transmission may start at a pre-agreed subframe position. The subframe position at which the PDCCH bundle transmission starts may be defined as a fixed value. The fixed value may be known to the MTC device through system information, for example, a master information block (MIB). For example, if it is assumed that the PDCCH bundle transmission starts only in case of 'SFN(System Frame Number) % N = 0' (for example, N = 20), the value N may be reported to the MTC device through the MIB. In addition, if it is assumed that the PDCCH bundle is transmitted with an offset (transmission starts only in case of 'SFN % N = offset'), the value N may be reported to the MTC device through the MIB. For example, PDCCH transmission for the MTC device located in the coverage extension region may start only through a subframe or SFN position corresponding to a multiple of 100 (e.g., 0, 100, 200, 300, ...). In this case, the MTC device may attempt to receive the PDCCH through N subframes starting from the subframe or SFN location corresponding to the multiple of 100. Meanwhile, the subframe position at which the PDCCH bundle transmission can start may vary depending on each MTC device. In this case, information on the subframe position at which the PDCCH bundle transmission can start may be known to the MTC device through a higher layer signal such as RRC.

Meanwhile, hereinafter, a detailed example for a position of a subframe in which transmission of a PDCCH or PDSCH bundle starts, and a detailed example for a repetition number in the PDCCH or PDSCH bundle will be described.

**A. A subframe position at which transmission of a PDCCH/PDSCH bundle starts.**

Subframes in which the PDCCH bundle or the PDSCH bundle are transmitted may be consecutive or non-consecutive to each other. In this case, it may be assumed that an MTC device knows at which subframe the bundling is achieved. In addition, although the number of subframes in which the PDCCH bundle or the PDSCH bundle is transmitted or a repetition number in the bundle may be set differently according to a coverage extension level required by the MTC device, it is assumed that the MTC device may know it through an SIB or other signals.

Meanwhile, the MTC device may not always be able to use all subframes for reception of the PDCCH bundle or the PDSCH bundle. Optionally, subframes configured as an MBSFN subframe or a special subframe may not be used for the reception of the PDCCH bundle and the PDSCH bundle. Further, in order to decrease an influence on an operation of the legacy MTC device, only some subframes may be used for the reception of the PDCCH bundle and the PDSCH bundle.

In this case, a position of a subframe which can be used by the MTC device to receive the PDCCH bundle and the PDSCH bundle may be pre-defined or may be configured semi-statically. In this case, the MTC device may know the position of the subframe which can be used to receive the PDCCH bundle and the PDSCH bundle through an SIB or an RRC signal.

Meanwhile, the position of the subframe which can be used to receive the PDCCH bundle and the PDSCH bundle may differ for each MTC device. For this, the position of the subframe may be dynamically configured for the MTC device. That is, a BS may report the position of the subframe in which the MTC device can receive the PDCCH bundle and the PDSCH bundle through a PDCCH (e.g., DCI). For example, the BS may report a pattern of the subframe which can be used by the MTC device to receive the PDCCH bundle and the PDSCH bundle through the PDCCH (e.g., DCI). The pattern of the subframe may be reported to the MTC device as follows. The pattern of the subframe which can receive the PDCCH bundle and the PDSCH bundle may be reported to the MTC device in unit of one radio frame or a specific number of radio frames in a bitmap format. When the subframe which can receive the PDCCH bundle and the PDSCH bundle is configured in unit of the radio frame, a pattern of the radio frame or the SFN may be reported to the MTC device once in every the specific number of radio frames in the bitmap format.

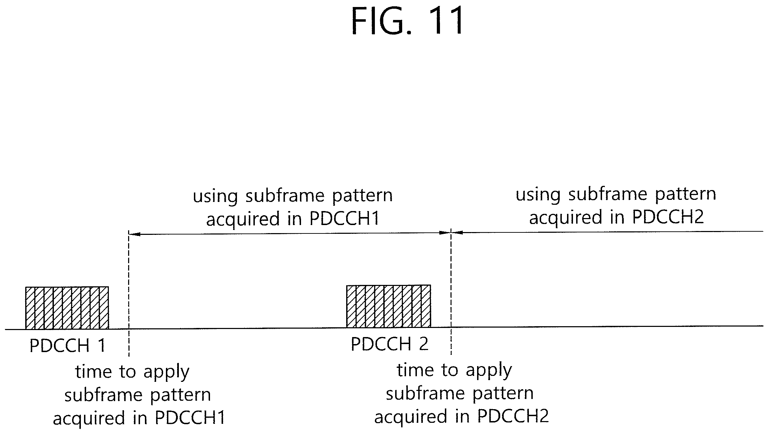

**FIG. 11 illustrates an example of changing a subframe pattern capable of transmitting a PDCCH bundle.**

Referring to FIG. 11, a pattern of a subframe in which a PDCCH bundle and a PDSCH bundle can be received may be applied starting from a specific time, and may be used until a new subframe pattern is applied. In this case, the pattern of the subframe may be known to an MTC device through a DCI in a PDCCH. A time at which the MTC device applies the pattern to the new subframe may be various as follows.

First, when a last subframe of a PDCCH bundle containing information regarding the subframe pattern is a subframe D, the MTC device may apply a subframe pattern acquired from a corresponding PDCCH starting from a subframe D+1.

Alternatively, when the last subframe of the PDCCH bundle containing the information regarding the subframe pattern is the subframe D, the MTC device may apply the subframe pattern acquired from the corresponding PDCCH starting from a subframe D+k (k >0).

Meanwhile, the method of applying the pattern of the subframe which can receive the PDCCH bundle and the PDSCH bundle may be used for multiplexing of a control channel/data channel. For example, a collision in PDCCH bundle transmission or PDSCH bundle transmission performed between MTC devices can be reduced by reporting a different subframe pattern to each MTC device. For another example, in PDCCH bundle transmission, bundle transmission subframe resources of several PDCCHs can be divided by reporting a different subframe pattern to the MTC device for each aggregation level or repetition level.

Meanwhile, the position of the subframe in which the PDCCH bundle and the PDSCH bundle can be transmitted (i.e., the position of the subframe in which repetition is achieved) may be set differently for each MTC device, and this may be reported to the MTC device, for example, through an RRC signal. The position of the subframe in which the PDCCH bundle and the PDSCH bundle can be transmitted may be reported to the MTC device by being set in unit of a specific time duration (a specific subframe duration or a specific radio frame duration). For example, if the position of the subframe in which the PDCCH bundle and the PDSCH bundle can be transmitted is reported in unit of 10 subframes, the position of the subframe is repetitively applied in every 10 subframes.

In this case, the specific time duration (the specific subframe duration or the specific radio frame duration) for reporting the position of the subframe in which the PDCCH bundle and the PDSCH bundle can be transmitted may be equal to a period between subframes in which transmission of the PDCCH bundle and the PDSCH bundle can start.

Hereinafter, a PDCCH repetition level in the PDCCH bundle will be described.

**B. PDCCH repetition number in PDCCH bundle**

A PDCCH repetition number (or level) in a PDCCH bundle, that is, the number of subframes in which the PDCCH bundle is transmitted, may vary depending on which PDSCH is scheduled by the PDCCH or which RNTI is used in scrambling by the PDCCH. In case of a PDCCH of which a DCI CRC is scrambled with an SI-RNTI or an R-RNTI (a PDCCH configured with the SI-RNTI or the R-RNTI), the PDCCH may be transmitted only one subframe, instead of being repeated on a plurality of subframes.

On the other hand, for the PDCCH of which the DCI CRC is scrambled with the C-RNTI (the PDCCH configured with the C-RNTI), a corresponding PDCCH repetition number, that is, the number of subframes in which the PDCCH is transmitted, may be as follows.

- A PDCCH transmitted on a cell-specific space (CSS) and a PDCCH transmitted on a UE-specific search space (USS) may be transmitted repetitively on the identical number of subframes. In this case, a repetition number (or repetition level) of the PDDCH may differ for each MTC device.
- The PDCCH transmitted on the CSS and the PDCCH transmitted on the USS may be transmitted with different repetition numbers, that is, different number of subframes. In this case, the repetition number (i.e., the number of subframes) of the PDDCH transmitted on the USS may differ for each MTC device. In this case, the repetition number (or repetition level) of the PDCCH transmitted on the CSS may also differ for each MTC device. In this case, the repetition number (i.e., the number of subframes) of the PDCCH transmitted on the CSS may be transmitted with the same repetition number (i.e., the number of subframes) of the PDCCH configured with the RA-RNTI, or may be transmitted with a repetition number that can be inferred from a corresponding repetition number.
- The repetition number (i.e., the number of subframes) of the PDCCH transmitted on the CSS may be cell-specific, that is, may differ for each cell. In this case, the repetition number (i.e., repetition level) of the PDCCH transmitted on the CSS may be transmitted with the same repetition number as the PDCCH configured with the SI-RNTI, or may be transmitted with a repetition number that can be inferred from a corresponding repetition number.
- When the PDCCH transmitted on the USS region uses a DCI format different from a DCI format 1A, the PDCCH may be transmitted with a different repetition number for each MTC device. For example, the repetition number may vary depending on a DCI format. The PDCCH transmitted with the DCI format 1A may be transmitted with the same repetition number irrespective of a transmission region (CSS or USS). More specifically, the repetition number of the PDCCH which uses the DCI format 1A may differ for each MTC device. In this case, the repetition number of the PDCCH which uses the DCI format 1A may be transmitted with the same repetition number as the PDCCH configured with the RA-RNTI, or may be transmitted with a repetition number that can be inferred from a corresponding repetition number. For another example, the repetition number of the PDCCH having the DCI format 1A may be cell-specific, that is, may differ for each cell. In this case, the repetition number of the PDCCH having the DCI format 1A may be transmitted with the same repetition number as the PDCCH configured with the SI-RNTI, or may be transmitted with a repetition number that can be inferred from a corresponding repetition number.

**C. PDCCH transmission with one repetition number among various repetition number**

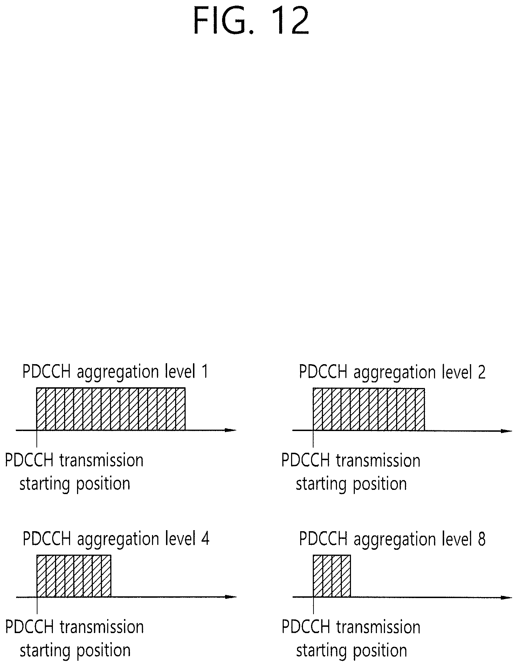

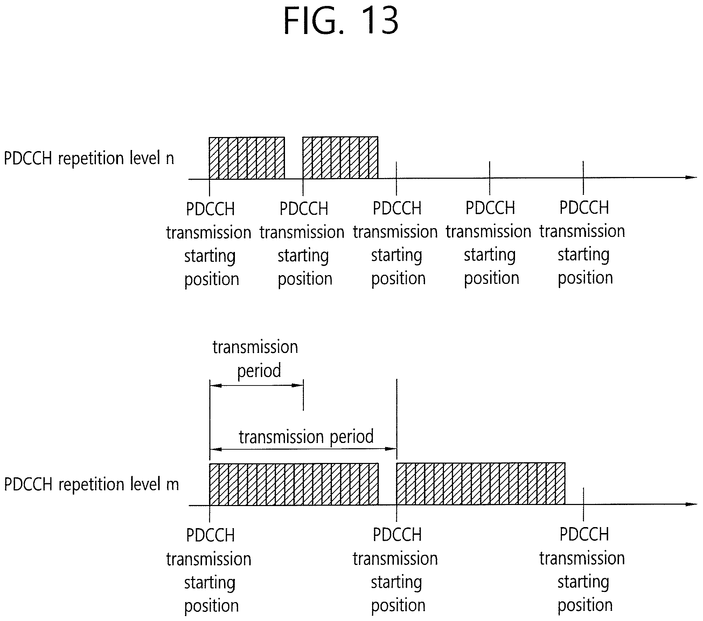

Meanwhile, when a coverage extension level (i.e., indicating to which extent the coverage is extended) for an MTC device is determined, a repetition number of the PDCCH for the MTC device may vary depending on an aggregation level of the PDCCH. This will be described hereinafter with reference to FIG. 12 and FIG. 13.

**FIG. 12 illustrates an example in which a PDCCH repetition number varies depending on a PDCCH aggregation level.**

As can be seen with reference to FIG. 12, when PDCCH aggregation levels 1, 2, 4, and 8 are used for an MTC device located in a coverage extension region, transmission may be achieved with a greater repetition number when a PDCCH uses a lower aggregation level.

A period and/or offset value (or subframe position/pattern) of a PDCCH transmission starting subframe as a subframe in which PDCCH bundle transmission can start may vary depending on a 'PDCCH repetition level' (or a repetition number of the PDDCH or the number of subframes in which a PDCCH bundle is transmitted). For example, the period of the subframe in which PDCCH bundle transmission starts may be set to be greater when using the 'PDCCH repetition level' (or the number of subframes in which the PDCCH bundle is transmitted) requiring more repetitions.

**FIG. 13 illustrates an example in which a transmission start position varies depending on a PDCCH repetition number.**

For example, if the PDCCH has L (e.g., 3) repetition levels (e.g., a PDCCH repetition level 1, a PDCCH repetition level 2, ..., a PDCCH repetition level L), a PDCCH repetition level m (where m>n) may require a repetition number (or the number of subframes) greater than a PDCCH repetition number n. In this case, to achieve a configuration in which transmission subframe regions of PDCCHs having different repetition levels overlap to the maximum extent possible, a period between a transmission starting subframe of a PDCCH bundle transmitted with the PDCCH repetition level m as shown in FIG. 13 may be N times (e.g., N=2) a period between transmission subframes of a PDCCH bundle transmitted with a repetition level lower by one level, i.e., a repetition level n. That is, a period between starting subframes of a PDCCH bundle transmitted with a specific PDCCH repetition level may be set to a multiple of a period between subframes of a PDCCH bundle transmitted with a repetition level lower by one level. By using this method, resources of the PDCCH can be more effectively distributed between PDCCH bundles transmitted with different repetition levels.

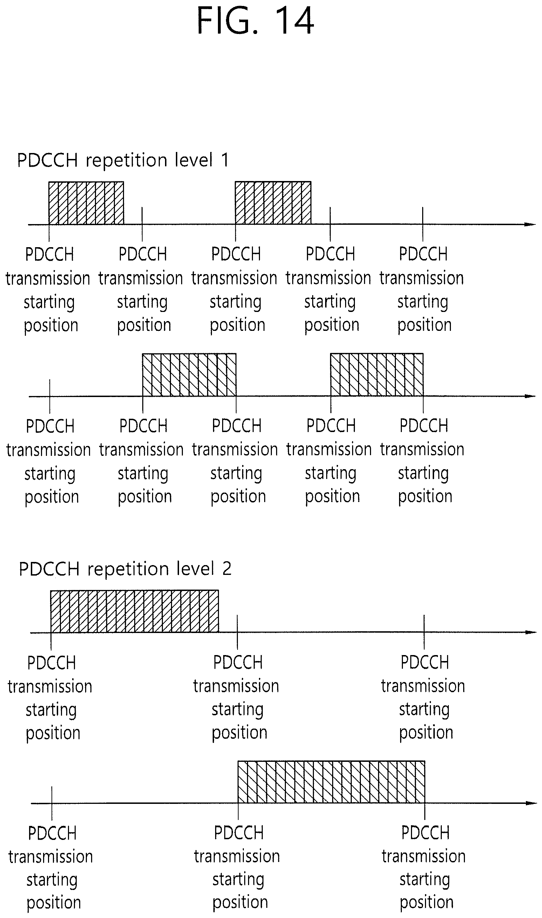

On the other hand, a position of a subframe in which transmission of a PDCCH bundle and a PDSCH bundle starts can be determined in a simpler manner. This will be described below with reference to FIG. 14.

**FIG. 14 illustrates an example of a position of a subframe in which transmission of each of a PDCCH bundle and a PDSCH bundle starts.**

As can be seen with reference to FIG. 14, a period (or interval) between subframes in which PDCCH bundle transmission can start may be equal to a period (or interval) between subframes in which PDSCH bundle transmission can start.

More specifically, when a time gap between a PDCCH bundle transmission ending subframe position and a PDSCH bundle transmission starting subframe position is a PDCCH/PDSCH gap, the present specification may propose that a period (or interval) between PDCCH bundle transmission starting subframes = PDCCH bundle transmission duration + PDCCH/PDSCH gap. Further, it may propose that PDCCH bundle transmission starting time + PDCCH/PDSCH gap is equal to a PDSCH transmission duration. Alternatively, the present specification proposes that a PDCCH bundle transmission duration is equal to a period (or interval) between PDCCH bundle transmission starting subframes, and that a PDCCH transmission duration is equal to PDCCH/PDSCH gap + PDSCH transmission duration.

Meanwhile, a period and/or offset value (or subframe position/pattern) of a transmission starting subframe of a PDCCH bundle on a CSS and/or a USS may be set differently for each MTC device, or may be set differently according to the number of subframes in which the PDCCH bundle on the CSS is transmitted or an extended coverage level. In this case, in order for the MTC device to know the period of the subframe for receiving a MTC device-specific PDCCH bundle or a PDCCH bundle on the USS region, the period may be configured by a BS. Further, the number of subframes in which the MTC device-specific PDCCH bundle or the PDCCH bundle on the USS region is received or information regarding an extended coverage level may be configured for the MTC device by the BS. However, even before it is configured for the MTC device, there may be a case where the MTC device-specific PDCCH bundle or the PDCCH bundle on the USS region must be received, and in this case, the MTC device may attempt to receive the PDCCH bundle by using a default configuration (i.e., a period/position of a default subframe). The period/position of the default subframe may be as follows.

- A period/position of a subframe in which transmission of a PDCCH of which a DCI CRS is scrambled with an SI-RNTI can start.
- A period/position of a subframe in which transmission of a PDCCH of which a DCI CRS is scrambled with an RA-RNTI can start.
- A period/position of a subframe in which transmission of a PDCCH on CSS can start.
- A period/position of a subframe in which transmission of a PDCCH having a DCI format 1A on CSS can start.
- A period/position of a subframe in which transmission of a cell-specific PDCCH can start.

The period/position of the default subframe may be used in the following situation.

- Before the number of subframes or a coverage extension level for transmitting an MTC device-specific PDCCH bundle or a PDCCH bundle on a USS is configured, or before it is configured but is not applied.
- When the number of subframes or the coverage extension level for transmitting the MTC device-specific PDCCH bundle or the PDCCH bundle on the USS is ambiguous.

Meanwhile, the period and/or offset value (or subframe position/pattern) of the subframe in which transmission of the PDCCH bundle on the CSS and/or the USS starts may be set differently for each MTC device, and corresponding values may differ for each C-RNTI value of the MTC device. For example, the offset value for indicating the position of the subframe in which transmission of the PDCCH bundle starts may vary depending on the C-RNTI value of the MTC device. For example, if the period of the subframe in which transmission of the PDCCH bundle starts is P, the offset value may be set to (C-RNTI*$\alpha$)mod P.

**D. PDCCH bundle transmission with any one of various aggregation levels**

Meanwhile, the period of subframe in which transmission of the PDCCH bundle can start may be set equally in the same 'PDCCH coverage extension level'. That is, the same period may be used in the same 'PDCCH coverage extension level' even if a PDCCH aggregation level is changed. Alternatively, the period of the subframe in which transmission of the PDCCH bundle can start may have a different value according to a real PDCCH transmission number (i.e., the number of subframes in which the PDCCH bundle is transmitted) in order to decrease a latency for PDCCH bundle and PDSCH bundle reception. For example, a PDCCH bundle having a higher aggregation level may be transmitted through a smaller number of subframes (through a smaller repetition number).

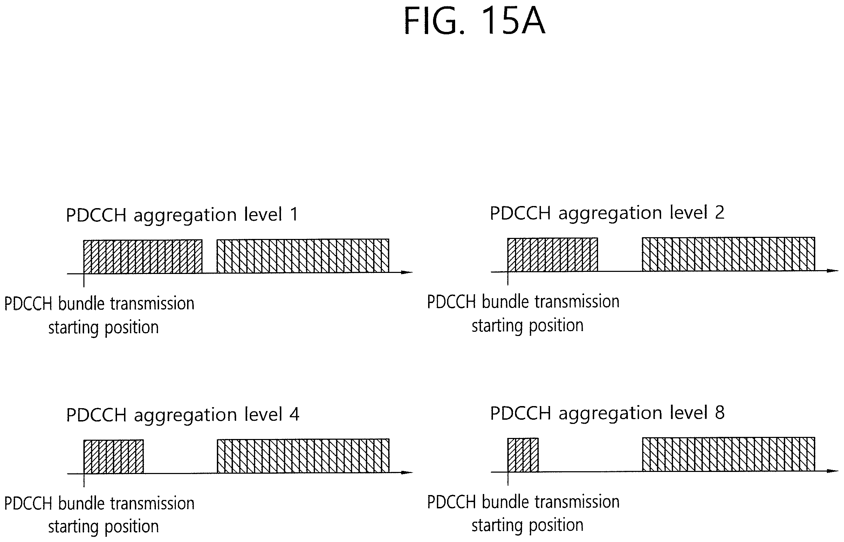

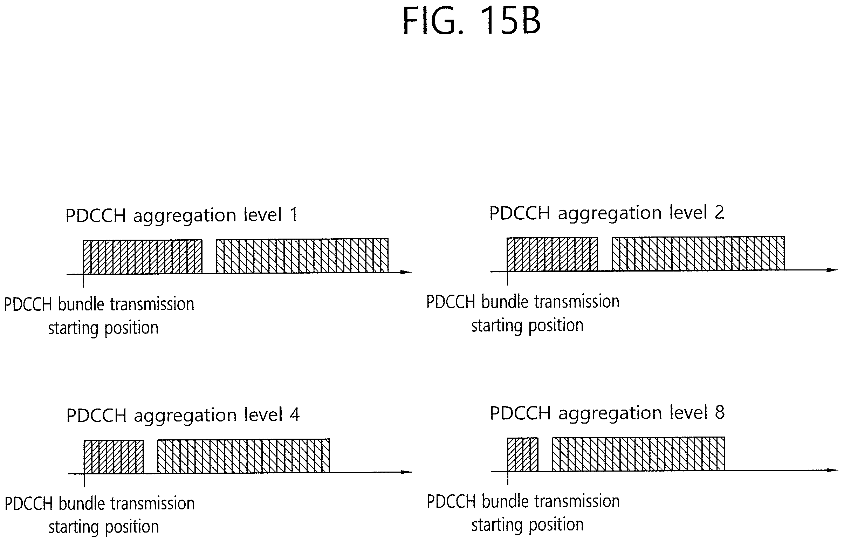

**FIG. 15a illustrates an example in which a PDSCH bundle transmission starting position is identical irrespective of a real PDCCH transmission number. FIG. 15b illustrates an example in which a PDSCH bundle transmission starting position varies depending on a real PDCCH transmission number.**

As can be seen with reference to FIG. 15a, a PDSCH bundle transmission starting subframe position may be identical irrespective of the real PDCCH transmission number. That is, a difference between a PDCCH bundle transmission starting subframe position and the PDSCH bundle transmission starting subframe position may be identical irrespective of the real PDCCH transmission number.

On the other hand, as can be seen with reference to FIG. 15b, a PDSCH bundle transmission starting subframe position may vary depending on a real PDCCH transmission number. That is, a difference between a PDCCH bundle transmission starting subframe position and the PDSCH bundle transmission starting subframe position may vary depending on the real PDCCH transmission number. Alternatively, a difference between a PDCCH bundle transmission ending subframe position and the PDSCH bundle transmission starting subframe position may be kept the same irrespective of the real PDCCH transmission number. Alternatively, PDCCH bundle starting points and PDSCH bundle starting points may be set independently of each other. If the starting points are set independently, it may be assumed that PDSCH bundle transmission can start on an available subframe among subframes located after the PDCCH bundle ending points. However, by considering a case where the PDSCH bundle cannot be transmitted at that point, a DCI in a corresponding PDCCH may indicate whether the PDSCH bundle starts directly or is delayed. For example, a PDSCH delay field may be added to the DCI in the PDCCH so that the MTC device assumes that, if the field is '0', the PDSCH bundle is transmitted from a BS on a possible earliest subframe, whereas if the field is '1', the PDSCH bundle is transmitted from the BS on a next subframe.

In addition, if the PDCCH bundle ending point is identical to the PDSCH bundle starting subframe, it is assumed that a next starting subframe is valid. That is, when overlapped, it may not be regarded as a valid PDSCH bundle transmission starting subframe. Further, if an aggregation level of the PDCCH is greater by N-fold, a PDCCH repetition number (i.e., repetition level, subframe number) may be less by 1/N-fold. For example, if the aggregation level is 1, the PDCCH bundle may be repetitively transmitted through D subframes, whereas if the aggregation level is 2, the PDCCH bundle may be repetitively transmitted through D/2 subframes. Likewise, in a case where the aggregation level is 4 and a case where the aggregation level is 8, the PDCCH bundle may be transmitted through D/4 subframes and D/8 subframes, respectively.

Further, a period of a subframe in which PDCCH bundle transmission can start may vary depending on the PDCCH aggregation level, and if the aggregation level is greater by N-fold, the PDCCH repetition number (repetition level, repetition subframe number) may be less by 1/N. For example, if the aggregation level is 1, a period between PDCCH bundle starting subframes may be P, whereas if the aggregation level is 2, the period of the PDCCH bundle starting subframe may be P/2. Likewise, in a case where the aggregation level is 4 and a case where the aggregation level is 8, the period may be P/4 and P/8, respectively.

Meanwhile, hereinafter, aspects to be considered according to various aggregation levels will be described.

(1) PDCCH bundle and PDSCH bundle transmission according to various aggregation levels

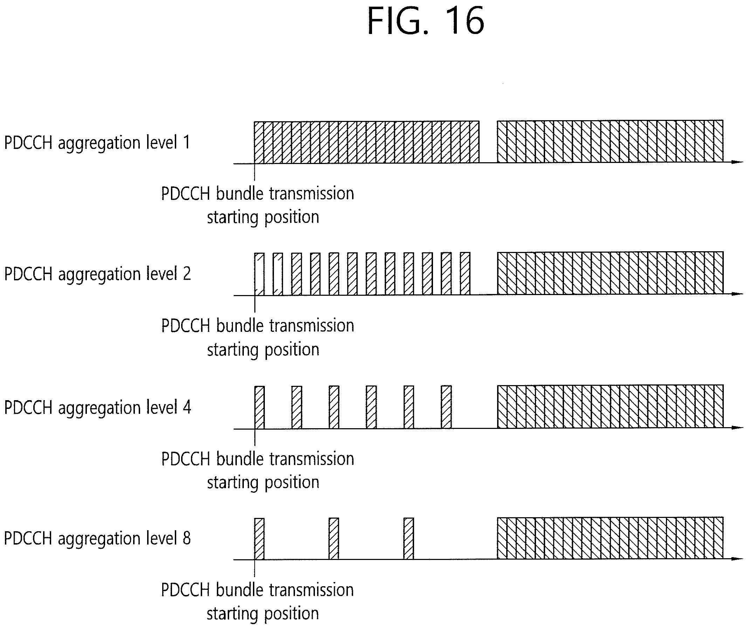

A PDCCH bundle and a PDSCH bundle may be transmitted in a different configuration according to a PDCCH aggregation level in one 'PDCCH repetition level'. This will be described below in detail with reference to FIG. 16.

**FIG. 16 illustrates an example in which PDCCH bundle transmission is changed variously according to an aggregation level.**

Referring to FIG. 16, when using a lowest aggregation level (e.g., aggregation level 1), a PDCCH bundle may be transmitted on consecutive subframes. In case of using a higher aggregation level (e.g., aggregation level 2, 4, 8,), the PDCCH bundle may be transmitted on a less number of subframes. As such, the PDCCH bundle using the higher aggregation level may be transmitted across a subframe duration in which the PDCCH bundle having the lowest aggregation level is transmitted. That is, the PDCCH bundle using the higher aggregation level may be used by using only some of subframes in which the PDCCH bundle having the lowest aggregation level is transmitted. Therefore, an interval may exist between subframes in which the PDCCH bundle is transmitted according to the PDCCH aggregation level. In this case, a value of the interval may vary depending on the PDCCH aggregation level.

Meanwhile, subframes in which the PDCCH bundle having the higher aggregation level can be transmitted may correspond to a subset of a subframe position at which the PDCCH bundle having the lower aggregation level can be transmitted. This is to facilitate scheduling performed to reduce overlapping of a subframe in which an MTC device-specific PDCCH bundle is transmitted.

Although it can be said in general that the number of corresponding bundles is linearly decreased in proportion to an increase in an aggregation level, there may be other cases optionally. If the aggregation level is 1 when a bundle size is N, the bundle size may be less than N and greater than N/2 when the aggregation level is 2. The bundle size may be reported to the MTC device through an SIB or other signals. If a maximum size of the PDCCH bundle is M (M >= N), it may be assumed that, when the aggregation level is 1, the PDCCH bundle is transmitted consecutively starting from 'starting subframe + offset', and when the aggregation level is 2, the PDCCH bundle is transmitted starting from 'starting subframe + offset' only on an even or odd subframe. In this case, if the number of bundles is greater than (M-offset)/2, a wrap-around may be applied. If the applying of the wrap-around causes overlapping with previously selected subframes, '+1' is applied in the wrap-around. If the aggregation level is 4, PDCCH bundle transmission may be achieved with an interval of 4 subframes starting from 'starting subframe + offset'. Also in this case, the wrap-around may be equally achieved.

On the other hand, if a PDCCH repetition number is N when the aggregation level is 1 and if the PDCCH repetition number is N/2 when the aggregation level is 2, a PDCCH bundle with the aggregation level 1 may be transmitted across N consecutive subframes, and a PDCCH bundle with the aggregation level 2 may be transmitted only through a 'subframe n' for which a value of 'n mod 2' is 0 or 'subframes n' for which the value of 'n mod 2' is 1 among the N subframes. Likewise, if the aggregation level is 4 and the PDCCH repetition number is N/4, a PDCCH bundle with the aggregation level 4 may be transmitted only through 'subframes n' for which a value of 'n mod 4' is 0, 1, 2, or 3 among the N subframes.

Meanwhile, although it is described above in FIG. 15a and FIG. 15b that the PDCCH bundle is transmitted always through consecutive subframes irrespective of the aggregation level, since the PDCCH bundle may be transmitted non-consecutively depending on the aggregation level according to FIG. 16, a PDCCH bundle transmission ending point is almost similar even if the aggregation level is different. That is, as shown in FIG. 16, even if the PDCCH bundle is transmitted with a different aggregation level, PDSCH bundle transmission may start always from the same subframe.

When using the aforementioned PDCCH bundle transmission method, the following transmission method can be used to avoid a PDCCH bundle transmission resource collision of an MTC device in the presence of several MTC devices and to distribute positions of subframes in which the PDCCH bundle is transmitted.

First, when the PDCCH bundle is transmitted to several MTC devices, a subframe position at which real PDCCH bundle transmission starts may vary with an offset. In this case, the offset value may vary depending on the MTC device. For example, the offset value may vary depending on an ID of the MTC device.

Alternatively, when a BS transmits a PDCCH bundle to MTC devices with the same 'PDCCH repetition level' and the same aggregation level, several subframe patterns may be present by which the PDCCH bundle can be transmitted. In this case, a subframe pattern to be used to transmit an MTC device-specific PDCCH bundle may be identical or different. The subframe pattern may vary depending on an ID of the MTC device.

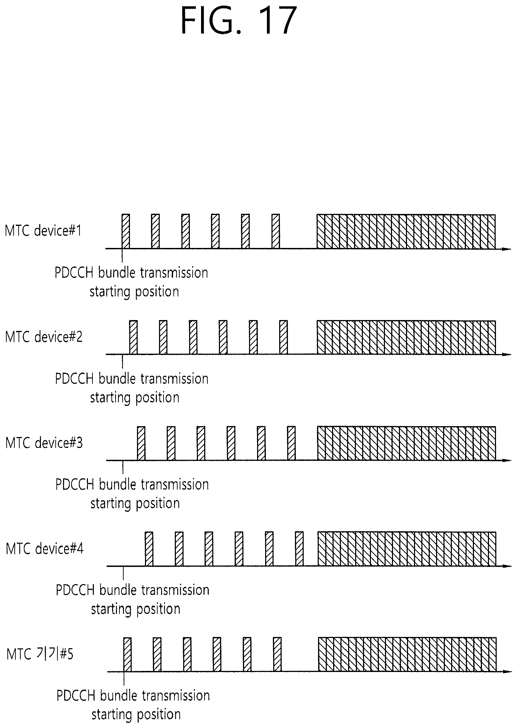

For example, as shown in FIG. 16, if the PDCCH bundle with the aggregation level 1 is transmitted across N consecutive subframes and the PDCCH bundle with the aggregation level 4 for the PDCCH repetition level N/4 is transmitted only through the 'subframe n' for which the value of 'n mod 4' is 1, 2, 3, or 3 among the N subframes, a subframe position at which MTC device-specific real PDCCH transmission starts may have a different value among 0, 1, 2, and 3. This will be described below in detail with reference to FIG. 17.

**FIG. 17 illustrates an example in which a PDCCH bundle transmission starting subframe position varies for each MTC device.**

As can be seen with reference to FIG. 17, an MTC device#1 may receive a PDCCH bundle through subframes for which a value of 'n mod 4' is 0 starting from a subframe 0, and an MTC device#2 may receive a PDCCH bundle through subframes for which a value of 'n mod 4' is 1 starting from a subframe 1. In this case, if the number of values of a subframe offset at which an MTC device can start PDCCH bundle reception is M, a subframe offset value to be used by the MTC device may vary depending on an ID of the MTC device. For example, an offset value to be used by a specific MTC device may be the same as 'MTC device ID mod M'. Alternatively, an offset value for determining a PDCCH bundle reception starting position may be determined according to a function using one or more of an ID of an MTC device, a PDCCH aggregation level, and a radio frame number. This is to evenly distribute positions of subframes in which MTC device-specific PDCCH bundle reception starts.

Meanwhile, it is shown in FIG. 17 that PDCCH bundles for different MTC devices are distributed to different subframe regions. However, when considering a situation where a plurality of PDCCH bundles are transmitted to one MTC device, a plurality of subframe regions may be used for one MTC device. In this case, it may be considered that several subframe regions of FIG. 17 are for one MTC device, and subframe regions for the plurality of PDCCH bundles for one MTC device may be identical to or different from each other. Further, in this case, although a search space of an MTC device is not a part of the subframe region but an entirety of the subframe region, one PDCCH bundle may be constructed of the part of the subframe region.

(2) Modified example of PDCCH bundle and PDSCH bundle transmission according to various aggregation levels

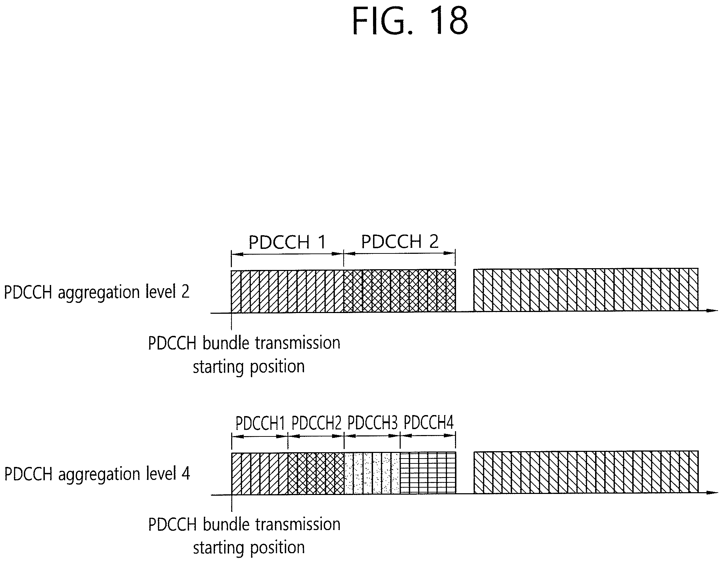

Meanwhile, a PDCCH bundle and a PDSCH bundle may be transmitted in a different configuration according to a PDCCH aggregation level in one 'PDCCH repetition level'. This will be described below with reference to FIG. 18.

**FIG. 18 illustrates an example in which a region of subframes in which a PDCCH bundle can be transmitted varies depending on a PDCCH aggregation level.**

As shown in FIG. 18, a PDCCH bundle is basically transmitted through consecutive subframes, while a position (or offset value) of a PDCCH bundle transmission starting subframe may vary depending on a PDCCH aggregation level. That is, when PDCCH bundles are transmitted to several MTC devices, each PDCCH bundle may have a transmission starting position which varies depending on an offset value for a specific subframe position. The offset value may vary depending on an aggregation level and/or an MTC device ID. As shown in FIG. 18, for example, in case of a specific aggregation level, a plurality of regions such as PDCCHs 1, 2, 3, and 4 may be present as a position of a subframe in which a PDCCH bundle can be transmitted, and a position of a subframe in which transmission of the PDCCH bundle can start may be distributed according to an offset. In this case, the offset value may differ for each MTC device. In this case, a range/candidate/set of the offset value may vary depending on the aggregation level.

Meanwhile, from a perspective of the MTC device, the number of regions in which the PDCCH bundle can be received may vary depending on an PDCCH aggregation level. In this case, in order to transmit the PDCCH bundle to a specific MTC device, a BS may select a specific region among a plurality of subframe regions.

Meanwhile, a subframe position at which real transmission can start may differ for each MTC device in not only PDCCH bundle but also PDSCH bundle or PUSCH bundle transmission. That is, the subframe position at which real transmission can start may vary depending on an offset value for a specific subframe position. In this case, the offset value may vary depending on an MTC device. For example, the offset value may vary depending on an ID of the MTC device. More specifically, the offset value may be a value determined according to a function of 'MTC device ID' and/or 'radio frame number'. This is to evenly distribute positions of subframes in which an MTC device-specific PDSCH bundle/PUSCH bundle is transmitted.

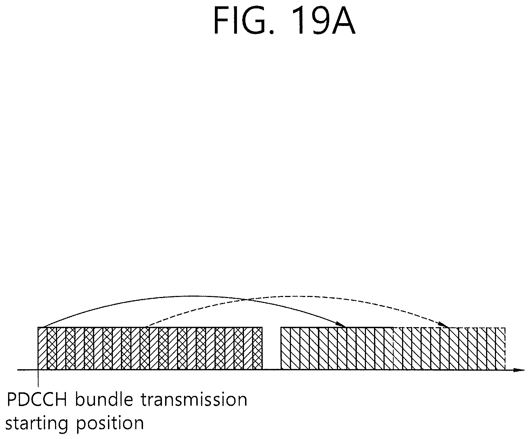

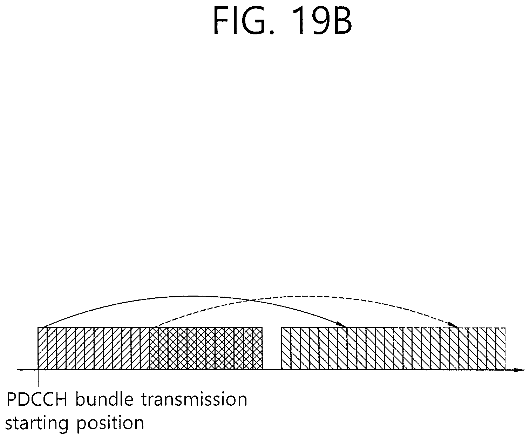

On the other hand, a PDSCH transmission position may vary depending on a PDCCH transmission position. This will be described below with reference to FIG. 19.

**FIG. 19a and FIG. 19b illustrate an example in which a PDSCH bundle transmission position varies depending on a PDCCH bundle transmission position.**

First, in a situation where a PDCCH bundle can be transmitted through an even subframe or an odd subframe as shown in FIG. 19a, if a 1st PDCCH bundle is transmitted through the even subframe, PDSCH bundle transmission starts from a 'subframe K', and if a 2nd PDCCH bundle is transmitted through the odd subframe, PDSCH bundle transmission may start from a 'subframe K + offset'. In this case, in particular, an offset size may be equal to a PDSCH transmission subframe number.

For another example, as shown in FIG. 19b, if the 1st PDCCH bundle is transmitted through first parts of subframes, the PDSCH bundle may also be transmitted through the first parts of subframes, and if the 2nd PDCCH bundle is transmitted through last parts of subframes, the PDSCH bundle may also be transmitted through the last parts of subframes.

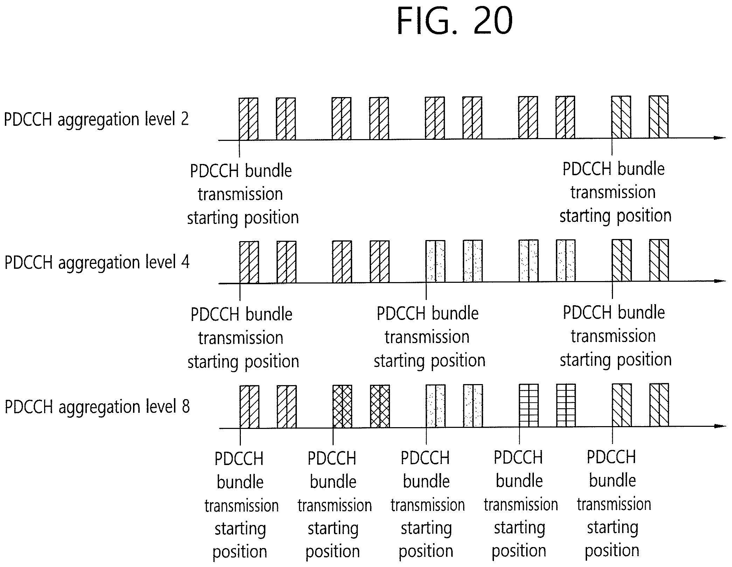

On the other hand, a configuration of a subframe in which a PDCCH bundle is transmitted may be changed variously according to an aggregation level This will be described below with reference to FIG. 20.

**FIG. 20 illustrates an example in which a configuration of a PDCCH bundle transmission subframe is changed according to an aggregation level.**

Referring to FIG. 20, a PDCCH transmission configuration is changed when a PDCCH aggregation level is 2, 4, 8. For example, in case of using an aggregation level 8, N subframes may be used among subframes in which a PDCCH bundle can be transmitted. In this case, a period between subframes in which transmission of the PDCCH bundle using the aggregation level 8 can start is denoted by P. Then, in case of using an aggregation level 4 which is a half level of the aggregation level 8, the PDCCH bundle may be transmitted by using two times the N subframes used for PDCCH bundle transmission in which the aggregation level 8 is used. As such, in case of using the aggregation level 4, a period between subframes in which PDCCH transmission can start may be 2P. In conclusion, a period of a subframe in which PDCCH bundle transmission using a specific aggregation level can start may be two times a period of subframes in which PDCCH bundle transmission using an aggregation level which is two times the specific aggregation level can start.

(3) PDCCH resource division

Meanwhile, to transmit a PDCCH not to an MTC device but to a typical UE, a PDCCH resource is determined as described above in association with Table 2.

However, when a PDCCH bundle is transmitted to the MTC device, the present specification proposes to determine the PDCCH resource as follows.

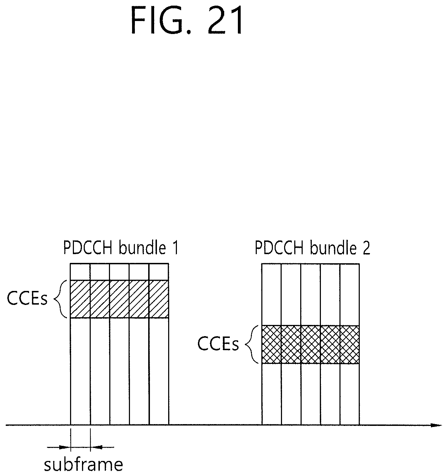

First, a resource position for identical PDCCH candidates / a starting position of resources / a CCE resource / a starting position of CCE resources may be set identically for each subframe in which the PDCCH bundle is transmitted. This will be described below with reference to FIG. 21.

**FIG. 21 illustrates an example in which a position of a CCE is kept the same during a subframe duration in which a PDCCH bundle is transmitted.**

As can be seen with reference to FIG. 21, a start position of a CCE resource/CCE resources may be kept the same during a time of transmitting a PDCCH bundle 1 (every subframe in which the PDCCH bundle 1 is transmitted). Likewise, the start position of the CCE resource/CCE resources may be kept the same during a time of transmitting a PDCCH bundle 2 (i.e., every subframe in which the PDCCH bundle 2 is transmitted).

For this, a value $Y_k$ which is a parameter for configuring a CCE resource constituting a PDCCH candidate may be allowed to be the same in a plurality of subframes in which one PDCCH bundle is transmitted. This is to avoid a collision of a CCE resource for transmission of a PDCCH candidate of different MTC devices during a PDCCH bundle transmission subframe and a collision of a USS resource and a CSS resource of the MTC device. For example, this is to prevent the CSS for the MTC device located in the coverage extension region from colliding with a USS for the MTC device not located in the coverage extension region when it is assumed that a CSS for an MTC device not located in a coverage extension region is configured separately from the CSS for the MTC device located in the coverage extension region. Further, this is to prevent a collision of a CCE resource for PDCCH transmission achieved for different MTC UEs (a collision during a PDCCH bundle is transmitted).

In this case, the resource position of one PDCCH candidate / the starting point of resources / the CCE resource / the starting point of CCE resources may differ for each MTC device. In this case, the resource position of the PDCCH candidate / the starting position of resources / the CCE resource / the starting position of CCE resources may be determined according to an MTC device ID (e.g., C-RNTI). Further, the resource position of the PDCCH candidate / the starting position of resources / the CCE resource / the starting position of CCE resources may be a value determined according to a PDCCH bundle transmission starting subframe index / a system frame number / an index (E)CCE index / a PDCCH bundle transmission starting subframe index. In this case, the PDCCH bundle transmission starting subframe index implies an index which is set to corresponding subframes, for example, in the presence of subframes in which PDCCH bundle transmission can start according to a specific period. Therefore, even for the same MTC device, the resource position of the PDCCH candidate / the starting position of resources / the CCE resource / the starting position of CCE resources may vary depending on the PDCCH bundle transmission starting position.

The value $Y_k$ may differ for each MTC device. In this case, the value $Y_k$ (in particular, a value $Y_{-1}$ as an initial value of $Y_k$) may be a value determined according to an MTC device ID (e.g., C-RNTI). Further, the value $Y_k$ (in particular, a value $Y_{-1}$ as an initial value of $Y_k$) may be determined according to the PDCCH bundle transmission starting subframe index / the system frame number / the index (E)CCE index / the PDCCH bundle transmission starting subframe index. In this case, the PDCCH bundle transmission starting subframe index implies an index which is set to corresponding subframes, for example, in the presence of subframes in which PDCCH bundle transmission can start according to a specific period. Therefore, even for the same MTC device, the value $Y_k$ (in particular, a value $Y_{-1}$ as an initial value of $Y_k$) may vary depending on the PDCCH bundle transmission starting position.

Alternatively, the resource position of the PDCCH candidate / the starting position of resources / the CCE resource / the starting position of CCE resources may be determined in a cell-specific manner (i.e., differently for each cell). That is, $Y_{-1}$ may be a value determined according to a cell ID.

The resource position of the PDCCH candidate / the starting position of resources / the CCE resource / the starting position of CCE resources may not be changed for each subframe but be kept the same value during a specific duration (e.g., a PDCCH transmission duration, a system frame duration). For this, the MTC device may assume that the resource position of the PDCCH candidate / the starting position of resources / the CCE resource / the starting position of CCE resources are not changed during a PDCCH bundle reception duration. For example, the MTC device may assume that the resource position of the PDCCH candidate / the starting position of resources / the CCE resource / the starting position of CCE resources used in a 1st subframe in which the PDCCH bundle is received are the same until PSCCH bundle reception is finished. However, the resource position of the PDCCH candidate / starting position of resources / CCE resource / starting position of CCE resources may be changed according to a certain cell-common pattern.

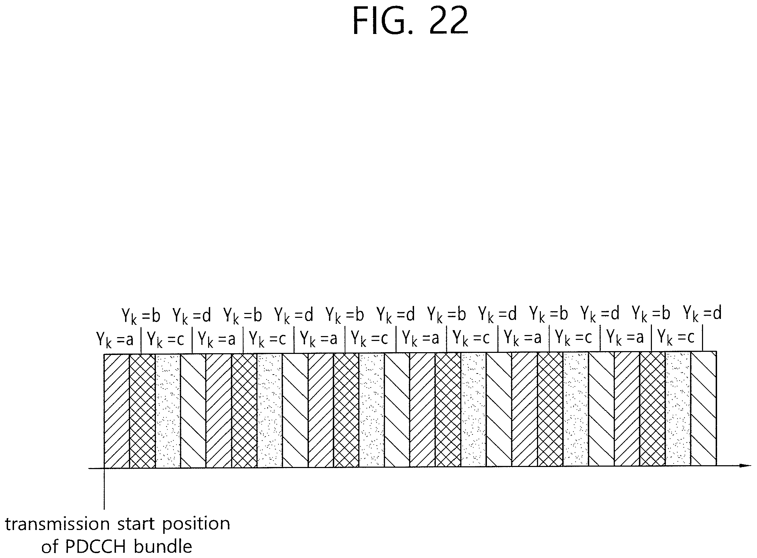

Meanwhile, the value $Y_k$ as the parameter for determining the CCE resource of the PDCCH candidate may be kept the same value without being changed for each subframe during a specific period (e.g., a PDCCH transmission duration, a system frame duration). For this, the MTC device may assume that, during a PDCCH bundle reception duration, the value $Y_k$ is the same as a value $Y_{-1}$ or a value $Y_k$ used in the 1st subframe in which the PDCCH bundle is transmitted. Alternatively, for this, the value k may imply not a subframe index but a system frame number. In this case, the value $Y_k$ may be kept the same value in a subframe which uses the same system frame number. Alternatively, in order to avoid overlapping of CCE resources constituting the PDCCH candidate for each MTC device, the value $Y_k$ is changed for each subframe, but may also be changed according to a cell-specific rule. For example, if the value $Y_k$ at a specific subframe for a specific MTC device is increased by X in comparison with a previous subframe, a value $Y_k$ at a corresponding subframe for another MTC device must also be increased by X in comparison with the previous subframe. In addition, the value $Y_k$ may be set to a starting subframe, initial ECCE position, or the like at a PDCCH bundle transmission window, and even if the value $Y_k$ is kept the same during the PDCCH bundle is transmitted, may be changed according to a certain cell-common pattern. For example, one pattern may be repeated for each radio frame, or a random pattern may be given. Accordingly, it may be re-calculated as $Y_k = Y_k + pattern$ (e.g., sf_index). The pattern (sf_index) may imply a value calculated according to a pattern and a subframe index. This is to randomize search spaces in which a collision occurs between cells. Although a pattern repeated every radio frame is described as one example, the pattern may be given across several radio frames. For example, when the PDCCH bundle is transmitted on K consecutive subframes, PDCCH candidates (i.e., search space) for transmitting a corresponding PDCCH in corresponding subframes may all be determined by the same value $Y_k$. For another example, when the PDCCH bundle is transmitted on subframes with an interval of p_c, PDCCH candidates (i.e., search space) for transmitting a corresponding PDCCH in corresponding subframes may all be determined according to the same value $Y_k$. This will be described with reference to FIG. 22.

**FIG. 22 illustrates an example in which a value $Y_k$ for determining a search space is equally used in a situation where a PDCCH bundle is transmitted on a subframe with a specific interval.**

As can be seen with reference to FIG. 22, when the PDCCH bundle is transmitted every 4 subframes, a value $Y_k$ for determining PDCCH candidates (i.e., a search space) may be kept the same in a corresponding subframe. When PDCCH bundle transmission starts from 'specific subframe + offset', a PDCCH of which an offset value is 0 is transmitted through subframes, i.e., a subframe n, a subframe n+4, a subframe n+8, ..., and the value $Y_k$ for determining the search space may have the same value in corresponding subframes. A PDCCH of which an offset value is 1 is transmitted through subframes, i.e., a subframe n+1, a subframe n+5, a subframe n+9, ..., and the value $Y_k$ for determining the search space may also have the same value in corresponding subframes.

In this case, for randomization of a PDCCH resource used between cells, a value $Y_{-1}$ may vary with a specific pattern (e.g., a cell-specific pattern) according to a time (e.g., according to a radio frame). Alternatively, for randomization of the PDCCH resource used between the cells, the value $Y_k$ may be a value which varies with a specific pattern (e.g., a cell-specific pattern) according to a time (e.g., according to a radio frame). In this case, it may be assumed that the value $Y_k$ is kept the same in a subframe region in which an identical PDCCH bundle is transmitted. Alternatively, it may be assumed that the value $Y_k$ is kept the same from a PDCCH bundle transmission starting subframe to a previous subframe of a next PDCCH bundle transmission starting subframe. Alternatively, it may be assumed that the value $Y_k$ is kept the same during a multiple of a duration from a PDCCH bundle transmission starting subframe to a previous subframe of a next PDCCH bundle transmission starting subframe. Alternatively, it may be assumed that the value $Y_k$ is kept the same from a PDCCH bundle transmission starting subframe having a highest repetition level (the greatest repetition number) to a previous subframe position of a next PDCCH bundle transmission starting subframe.

Meanwhile, a CCE resource of a PDCCH may be determined to transmit one PDCCH bundle transmitted through a plurality of subframes by using the conventional method in which the CCE resource for transmitting the PDCCH is changed in every subframe and a new method in which the aforementioned value $Y_k$ is kept the same so that the same CCE resource is used even if a subframe is changed. In this case, which method will be used by the MTC device to receive the PDCCH bundle between the conventional method and the proposed new method may be configured for the MTC device by a BS. That is, the BS may deliver the configuration to the MTC device. In this case, a method to be used to receive the PDCCH bundle may be different from a method to be used to receive an EPDCCH bundle. For this, the method to be used to receive the PDCCH bundle and the method to be used to receive the EPDCCH bundle may be separately configured for the MTC device by the BS. The configuration may be achieved semi-statically through an SIB, an RRC signal, or the like, or may differ for each MTC device, or may be cell-specific. Alternatively, the configuration may be dynamically changed through a PDCCH. Further, the BS may deliver several types of functions for determining the value $Y_k$ to the MTC device, may signal which type will be used by a specific MTC device to a higher layer, and may separately configure each of the PDCCH and the EPDCCH. The higher layer signal may be cell-specific or may be different for each MTC device.

Further, in order to reduce a restriction occurring when a PDCCH is scheduled for the legacy UE since a PDCCH resource is allocated for a specific MTC device for an excessively long subframe duration, the present specification proposes to restrict a CCE resource which can be used by the MTC device. That is, CCEs constituting a PDCCH candidate m for the MTC device may be restricted to be configured of only CCEs within a specific range.

For example, the CCEs constituting the PDCCH candidate m for the MTC device may be determined by Equation 3 below.

**[Equation 3]**

$$\{(Y_k + m')\bmod(\lfloor N_{CCE,k}/L \rfloor - a)\} + i + a$$

In this case, up to CCE indexes 0 to (a-1) cannot be used as a CCE constituting the PDCCH candidate m, and only the remaining CCEs can construct the PDCCH candidate m.

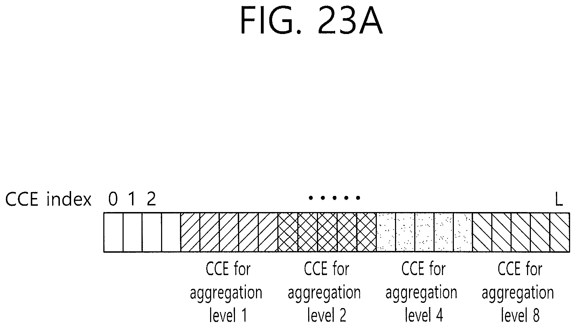

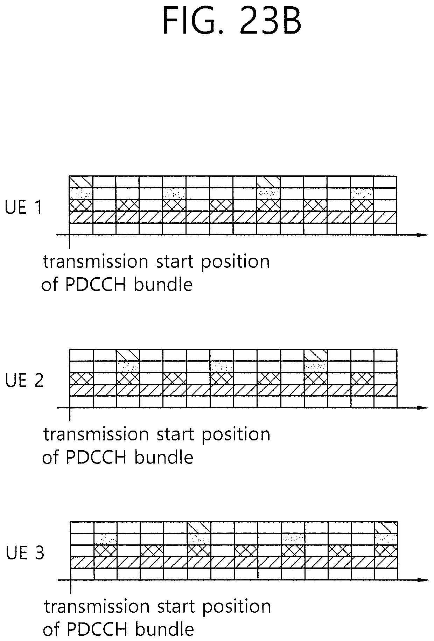

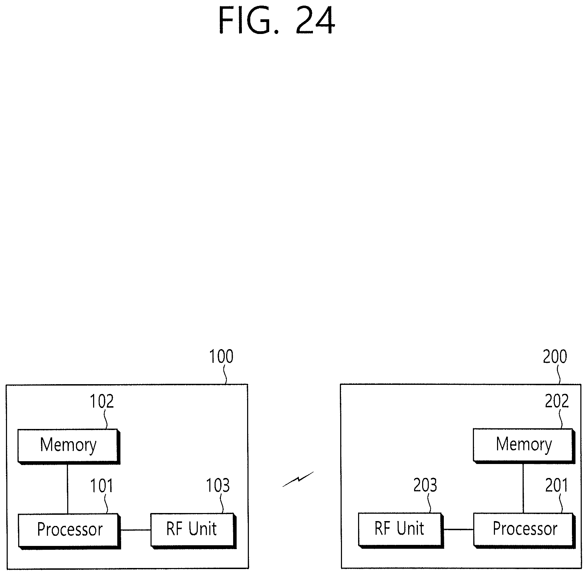

Further, the present specification proposes to distinguish a PDCCH transmission resource for each PDCCH aggregation level in one subframe, in order to avoid a collision of the PDCCH transmission resource between MTC devices having different aggregation levels in one subframe. For this, a value $Y_k$ for determining a CCE resource of a PDCCH candidate may be allowed to have a different value according to an aggregation level. Alternatively, for this, a set of a value for the value $Y_k$ for determining the CCE resource of the PDCCH candidate may be allowed to be different for each aggregation level. Alternatively, as shown in FIG. 23a, it is proposed that the CCE constituting the candidate m is used differently according to the PDCCH aggregation level. Alternatively, it is proposed that a set of a CCE index capable of constituting the candidate m is applied differently according to the PDCCH aggregation level. This will be described below with reference to FIG. 23 and FIG. 24.

**FIG. 23a and FIG. 23b illustrate examples in which a set of a CCE index of a candidate m is determined differently according to a PDCCH aggregation level.**

As can be seen with reference to FIG. 23a, a search space/PDCCH candidate resource/CCE resource used to transmit a PDCCH in one subframe may be identified according to a PDCCH aggregation level. In this case, when a PDCCH transmission subframe position may differ for each PDCCH aggregation level and MTC device (according to an MTC device ID) as described above, the search space/PDCCH candidate resource/CCE resource used to transmit the PDCCH based on the aggregation level may differ for each MTC as shown in the example of FIG. 23b.

(4) Subframe division

Meanwhile, as shown in FIG. 23a, if a CCE resource of a search space is divided for each aggregation level in one subframe, the CCE resource may overlap since the CCE resource of the search space of each aggregation level is insufficient. Therefore, the present specification proposes to divide a subframe transmitted for each aggregation level so that the CCE resource of the search space does not overlap for each aggregation level.

For example, a position of a subframe in which a PDCCH can be transmitted may be identified according to an aggregation level. Alternatively, only a search space for aggregation levels 1 and 8 may exist through odd subframes, and only a search space for aggregation levels 1, 2, and 4 may exist through even subframes.

(5) PRB division

If an EPDCCH is used in MTC, in order to identify a resource used for each aggregation level of the EPDCCH, a PRB resource for transmitting the EPDCCH for each aggregation level of the EPDCCH may be identified. Alternatively, a PRB resource in which a search space of the EPDCCH is present may be identified for each aggregation level of the EPDCCH.

Alternatively, an EPDCCH set on which the EPDCCH can be transmitted for each aggregation level of the EPDCCH may be identified. In particular, some EPDCCH aggregation levels may be transmitted only on an EPDCCH set 1, and some EPDCCH aggregation levels may be transmitted only on an EPDCCH set 2.

The aforementioned embodiments of the present invention can be implemented through various means. For example, the embodiments of the present invention can be implemented in hardware, firmware, software, combination of them, etc. Details thereof will be described with reference to the drawing

**FIG. 24 is a block diagram of a wireless communication system according to a disclosure of the present specification.**

A BS 200 includes a processor 201, a memory 202, and a radio frequency (RF) unit 203. The memory 202 is coupled to the processor 201, and stores a variety of information for driving the processor 201. The RF unit 203 is coupled to the processor 201, and transmits and/or receives a radio signal. The processor 201 implements the proposed functions, procedures, and/or methods. In the aforementioned embodiment, an operation of the BS may be implemented by the processor 201.

An MTC device 100 includes a processor 101, a memory 102, and an RF unit 103. The memory 102 is coupled to the processor 101, and stores a variety of information for driving the processor 101. The RF unit 103 is coupled to the processor 101, and transmits and/or receives a radio signal. The processor 101 implements the proposed functions, procedures, and/or methods.

The processor may include Application-specific Integrated Circuits (ASICs), other chipsets, logic circuits, and/or data processors. The memory may include Read-Only Memory (ROM), Random Access Memory (RAM), flash memory, memory cards, storage media and/or other storage devices. The RF unit may include a baseband circuit for processing a radio signal. When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means.

In the above exemplary systems, although the methods have been described on the basis of the flowcharts using a series of the steps or blocks, the present invention is not limited to the sequence of the steps, and some of the steps may be performed at different sequences from the remaining steps or may be performed simultaneously with the remaining steps. Furthermore, those skilled in the art will understand that the steps shown in the flowcharts are not exclusive and may include other steps or one or more steps of the flowcharts may be deleted without affecting the scope of the present invention.

**Claims**

1. A method for receiving a physical downlink control channel, PDCCH, the method performed by a machine type communication, MTC, device and comprising:

   when it is required to receive a PDCCH signal repeated in a plurality of subframes, determining a number of the plurality of subframes in which the PDCCH signal is repeated based on an aggregation level of the repeated PDCCH signal,
   wherein the number of the plurality of subframes in which the PDCCH signal is repeated is decreased when the aggregation level is increased;
   receiving the PDCCH signal, which is repeated in the determined number of the plurality of the subframes, and which includes downlink control information, DCI, from the base station, the DCI including information on a pattern of the subframes;
   determining the pattern of the subframes, in which a physical downlink shared channel, PDSCH, signal is repeated based on the DCI; and
   receiving the PDSCH signal which is repeated in the determined pattern of the subframes.

2. The method of claim 1, wherein resource elements of a control channel elements, CCEs, in the PDCCH signal are the same during receiving one PDCCH signal.

3. The method of claim 1, further comprising:

receiving information related to position of the plurality of subframes in which the PDCCH signal is repeated from a base station; and

determining the plurality of subframes in which the PDCCH signal is repeated based on the information related to the position,

wherein the information related to the position is transmitted through system information blocks, SIBs.

4. The method of claim 1, wherein a starting subframe in which the PDCCH signal is repeated is determined based on the number of the plurality of subframes in which the PDCCH signal is repeated.

5. The method of claim 1, wherein a starting subframe in which the PDCCH signal is repeated is determined based on the aggregation level of the repeated PDCCH signal.

6. The method of claim 1, wherein the plurality of subframes in which the PDCCH signal is repeated are no special subframes,

wherein the special subframes is located in first subframe and sixth subframe of a radio frame for time-division duplex, TDD.

7. A machine type communication, MTC, device (100) for receiving a physical downlink control channel, PDCCH, comprising:

a radio frequency, RF, unit (103) configured to receive a PDCCH signal repeated in a plurality of subframes; and

a processor (101) configured to determine a number of the plurality of subframes in which the PDCCH signal is repeated based on an aggregation level of the repeated PDCCH signal,

wherein the number of the plurality of subframes in which the PDCCH signal is repeated is decreased when the aggregation level is increased,

wherein the PDCCH signal includes downlink control information, DCI, the DCI including information on a pattern of the subframes

wherein the processor determines the pattern of the subframes, in which a physical downlink shared channel, PDSCH, signal is repeated based on the DCI, and

wherein the RF unit (103) further receives the PDSCH signal which is repeated in the determined pattern of the subframes.

8. The MTC device (100) of claim 7, wherein resource elements of a control channel elements, CCEs, in the PDCCH signal are the same during receiving one PDCCH signal.

9. The MTC device (100) of claim 7,

wherein the RF unit (103) receives information related to position of the plurality of subframes in which the PDCCH signal is repeated from a base station, and

wherein the processor (101) determines the plurality of subframes in which the PDCCH signal is repeated based on the information related to the position,

wherein the information related to the position is transmitted through system information blocks, SIBs.

10. The MTC device (100) of claim 7, wherein a starting subframe in which the PDCCH signal is repeated is determined based on the number of the plurality of subframes in which the PDCCH signal is repeated.

11. The MTC device (100) of claim 7, wherein a starting subframe in which the PDCCH signal is repeated is determined based on the aggregation level of the repeated PDCCH signal.

12. The MTC device (100) of claim 11, wherein the plurality of subframes in which the PDCCH signal is repeated are no special subframes,

wherein the special subframes is located in first subframe and sixth subframe of a radio frame for time-division duplex, TDD.

**Patentansprüche**

1. Verfahren zum Empfangen eines physikalischen Abwärtsstreckensteuerkanals, PDCCH, wobei das Verfahren von einer Maschinentypkommunikations-, MTC, Vorrichtung ausgeführt wird und umfasst:

wenn es erforderlich ist, ein PDCCH-Signal zu empfangen, das in einer Mehrzahl von Unterrahmen wiederholt wird, Bestimmen einer Anzahl der Mehrzahl von Unterrahmen, in denen das PDCCH-Signal wiederholt wird, basierend auf einer Aggregationsstufe des wiederholten PDCCH-Signals, wobei die Anzahl der Mehrzahl von Unterrahmen, in denen das PDCCH-Signal wiederholt wird, verringert wird, wenn die Aggregationsstufe erhöht wird;

Empfangen des PDCCH-Signals, das in der bestimmten Anzahl der Mehrzahl der Unterrahmen wiederholt wird und welches Abwärtsstreckensteuerinformation, DCI, enthält, von der Basisstation, wobei die DCI eine Information über ein Muster der Unterrahmen enthält;

Bestimmen des Musters der Unterrahmen, in denen ein Signal eines gemeinsam genutzten physikalischen Abwärtsstreckenkanals basierend auf der DCI wiederholt wird; und

Empfangen des PDSCH-Signals, das in dem bestimmten Muster der Unterrahmen wiederholt wird.

2. Verfahren nach Anspruch 1, wobei Ressourcenelemente von Steuerkanalelementen, CCEs, in dem PDCCH-Signal während eines Empfangs eines PDCCH-Signals gleich sind.

3. Verfahren nach Anspruch 1, ferner umfassend:

Empfangen von Information in Bezug auf eine Position der Mehrzahl von Unterrahmen, in denen das PDCCH-Signal wiederholt wird, von einer Basisstation; und

Bestimmen der Mehrzahl von Unterrahmen, in denen das PDCCH-Signal wiederholt wird, basierend auf der Information in Bezug auf die Position, wobei die Information in Bezug auf die Position durch Systeminformationsblöcke, SIBs, gesendet wird.

4. Verfahren nach Anspruch 1, wobei ein Startunterrahmen, in dem das PDCCH-Signal wiederholt wird, basierend auf der Anzahl der Mehrzahl von Unterrahmen, in denen das PDCCH-Signal wiederholt wird, bestimmt wird.

5. Verfahren nach Anspruch 1, wobei ein Startunterrahmen, in dem das PDCCH-Signal wiederholt wird, basierend auf der Aggregationsstufe des wiederholten PDCCH-Signals bestimmt wird.

6. Verfahren nach Anspruch 1, wobei die Mehrzahl von Unterrahmen, in denen das PDCCH-Signal wiederholt wird, keine speziellen Unterrahmen sind, wobei die speziellen Unterrahmen in einem ersten Unterrahmen und einem sechsten Unterrahmen eines Funkrahmens für Zeitduplex, TDD, angeordnet sind.

7. Maschinentypkommunikations-, MTC, Vorrichtung (100) zum Empfangen eines physikalischen Abwärtsstreckensteuerkanals, PDCCH, umfassend:

eine Funkfrequenz-, RF, Einheit (103), die eingerichtet ist, um ein PDCCH-Signal zu empfangen, das in einer Mehrzahl von Unterrahmen wiederholt wird; und

einen Prozessor (101), der eingerichtet ist, um eine Anzahl der Mehrzahl von Unterrahmen, in denen das PDCCH-Signal wiederholt wird, basierend auf einer Aggregationsstufe des wiederholten PDCCH-Signals zu bestimmen, wobei die Anzahl der Mehrzahl von Unterrahmen, in denen das PDCCH-Signal wiederholt wird, verringert wird, wenn die Aggregationsstufe erhöht wird,

wobei das PDCCH-Signal eine Abwärtsstreckensteuerinformation, DCI, enthält, wobei die DCI eine Information über ein Muster der Unterrahmen enthält,

wobei der Prozessor das Muster der Unterrahmen bestimmt, in denen ein Signal eines gemeinsam genutzten physikalischen Abwärtsstreckenkanals basierend auf der DCI wiederholt wird, und

wobei die RF-Einheit (103) ferner das PDSCH-Signal empfängt, das in dem bestimmten Muster der Unterrahmen wiederholt wird.

8. MTC-Vorrichtung (100) nach Anspruch 7, wobei Ressourcenelemente von Steuerkanalelementen, CCEs, in dem PDCCH-Signal während eines Empfangs eines PDCCH-Signals gleich sind.

9. MTC-Vorrichtung (100) nach Anspruch 7, wobei die RF-Einheit (103) Information in Bezug auf eine Position der Mehrzahl von Unterrahmen, in denen das PDCCH-Signal wiederholt wird, von einer Basisstation empfängt und wobei der Prozessor (101) die Mehrzahl von Unterrahmen, in denen das PDCCH-Signal wiederholt wird, basierend auf der Information in Bezug auf die Position bestimmt,
wobei die Information in Bezug auf die Position durch Systeminformationsblöcke, SIBs, gesendet wird.

10. MTC-Vorrichtung (100) nach Anspruch 7, wobei ein Startunterrahmen, in dem das PDCCH-Signal wiederholt wird, basierend auf der Anzahl der Mehrzahl von Unterrahmen, in denen das PDCCH-Signal wiederholt wird, bestimmt wird.

11. MTC-Vorrichtung (100) nach Anspruch 7, wobei ein Startunterrahmen, in dem das PDCCH-Signal wiederholt wird, basierend auf der Aggregationsstufe des wiederholten PDCCH-Signals bestimmt wird.

12. MTC-Vorrichtung (100) nach Anspruch 11, wobei die Mehrzahl von Unterrahmen, in denen das PDCCH-Signal wiederholt wird, keine speziellen Unterrahmen sind, wobei die speziellen Unterrahmen in einem ersten Unterrahmen und einem sechsten Unterrahmen eines Funkrahmens für Zeitduplex, TDD, angeordnet sind.

**Revendications**

1. Procédé de réception d'un canal physique de contrôle de liaison descendante, PDCCH, le procédé mis en œuvre par un dispositif de communication de type machine, MTC, et comprenant :

   lorsqu'il est requis de recevoir un signal de PDCCH répété dans une pluralité de sous-trames, la détermination d'un nombre de la pluralité de sous-trames dans lesquelles le signal de PDCCH est répété sur la base d'un niveau d'agrégation du signal de PDCCH répété,
   dans lequel le nombre de la pluralité de sous-trames dans lesquelles le signal de PDCCH est répété est diminué lorsque le niveau d'agrégation est augmenté ;
   la réception du signal de PDCCH, qui est répété dans le nombre déterminé de la pluralité de sous-trames, et qui inclut une information de contrôle de liaison descendante, DCI, depuis la station de base, la DCI incluant une information sur un motif des sous-trames ;
   la détermination du motif des sous-trames, dans lequel un signal de canal physique partagé de liaison descendante, PDSCH, est répété sur la base de la DCI ; et
   la réception du signal de PDSCH qui est répété dans le motif déterminé des sous-trames.

2. Procédé selon la revendication 1, dans lequel des éléments de ressources d'éléments de canal de contrôle, CCE, dans le signal de PDCCH sont les mêmes durant la réception d'un signal de PDCCH.

3. Procédé selon la revendication 1, comprenant en outre :

   la réception d'une information se rapportant à une position de la pluralité de sous-trames dans lesquelles le signal de PDCCH est répété depuis une station de base ; et
   la détermination de la pluralité de sous-trames dans lesquelles le signal de PDCCH est répété sur la base de l'information se rapportant à la position,
   dans lequel l'information se rapportant à la position est transmise par l'intermédiaire de blocs d'information système, SIB.

4. Procédé selon la revendication 1, dans lequel une sous-trame de départ dans laquelle le signal de PDCCH est répété est déterminée sur la base du nombre de la pluralité de sous-trames dans lesquelles le signal de PDCCH est répété.

5. Procédé selon la revendication 1, dans lequel une sous-trame de départ dans laquelle le signal de PDCCH est répété est déterminée sur la base du niveau d'agrégation du signal de PDCCH répété.

6. Procédé selon la revendication 1, dans lequel la pluralité de sous-trames dans lesquelles le signal de PDCCH est répété ne sont pas des sous-trames spéciales,
   dans lequel les sous-trames spéciales sont localisées dans une première sous-trame et une sixième sous-trame d'une trame radio pour un duplexage par répartition dans le temps, TDD.

7. Dispositif (100) de communication de type machine, MTC, pour recevoir un canal physique de contrôle de liaison descendante, PDCCH, comprenant :

une unité (103) de radiofréquence, RF, configurée pour recevoir un signal de PDCCH répété dans une pluralité de sous-trames ; et

un processeur (101) configuré pour déterminer un nombre de la pluralité de sous-trames dans lesquelles le signal de PDCCH est répété sur la base d'un niveau d'agrégation du signal de PDCCH répété,

dans lequel le nombre de la pluralité de sous-trames dans lesquelles le signal de PDCCH est répété est diminué lorsque le niveau d'agrégation est augmenté,

dans lequel le signal de PDCCH inclut une information de contrôle de liaison descendante, DCI, la DCI incluant une information sur un motif des sous-trames,

dans lequel le processeur détermine le motif des sous-trames, dans lequel un signal de canal physique partagé de liaison descendante, PDSCH, est répété sur la base de la DCI, et

dans lequel l'unité (103) RF reçoit en outre le signal de PDSCH qui est répété dans le motif déterminé des sous-trames.

8. Dispositif (100) de MTC selon la revendication 7, dans lequel des éléments de ressources d'éléments de canal de contrôle, CCE, dans le signal de PDCCH sont les mêmes durant la réception d'un signal de PDCCH.

9. Dispositif (100) de MTC selon la revendication 7,
dans lequel l'unité (103) RF reçoit une information se rapportant à une position de la pluralité de sous-trames dans lesquelles le signal de PDCCH est répété depuis une station de base, et
dans lequel le processeur (101) détermine la pluralité de sous-trames dans lesquelles le signal de PDCCH est répété sur la base de l'information se rapportant à la position,
dans lequel l'information se rapportant à la position est transmise par l'intermédiaire de blocs d'information système, SIB.

10. Dispositif (100) de MTC selon la revendication 7, dans lequel une sous-trame de départ dans laquelle le signal de PDCCH est répété est déterminée sur la base du nombre de la pluralité de sous-trames dans lesquelles le signal de PDCCH est répété.

11. Dispositif (100) de MTC selon la revendication 7, dans lequel une sous-trame de départ dans laquelle le signal de PDCCH est répété est déterminée sur la base du niveau d'agrégation du signal de PDCCH répété.

12. Dispositif (100) de MTC selon la revendication 11, dans lequel la pluralité de sous-trames dans lesquelles le signal de PDCCH est répété ne sont pas des sous-trames spéciales,
dans lequel les sous-trames spéciales sont localisées dans une première sous-trame et une sixième sous-trame d'une trame radio pour un duplexage par répartition dans le temps, TDD.

# FIG. 1

# FIG. 2

Radio Frame

Slot

| #0 | #1 | #2 | ... | #18 | #19 |

Subframe

# FIG. 3

One radio-frame

One half-frame

One subframe

One slot

| #0 | | | | #2 | #3 | #4 | #5 | | | | #6 | #7 | #8 |

DwPTS  GP  UpPTS

DwPTS  GP  UpPTS

One OFDM symbol

CONTROL REGION        DATA REGION

EP 3 073 658 B1

# FIG. 4

1 DOWNLINK SLOT

7 OFDM SYMBOLS

$k = N_{RB} \times 12 - 1$

RESOURCE BLOCK
7 X 12 RESOURCE ELEMENTS

RESOURCE ELEMENT$(k, \ell)$

$N_{RB} \times 12$ SUBCARRIERS

12 SUBCARRIERS

$k = 0$

$\ell = 0$     $\ell = 6$

# FIG. 5

CONTROL REGION

DATA REGION

FIRST SLOT

SECOND SLOT

SUBFRAME

FREQUENCY

TIME

# FIG. 6

EP 3 073 658 B1

# FIG. 7

EP 3 073 658 B1

# FIG. 8

| m=1 | m=0 |
| m=3 | m=2 |

CONTROL REGION

DATA REGION

| m=2 | m=3 |
| m=0 | m=1 |

CONTROL REGION

FIRST SLOT | SECOND SLOT

SUBFRAME

FREQUENCY

TIME

# FIG. 9A

# FIG. 9B

basic coverage

coverage extension region

# FIG. 10A

EP 3 073 658 B1

N subframes              G subframes              D subframes

PDCCH bundle

PDSCH bundle

# FIG. 10B

# FIG. 11

EP 3 073 658 B1

using subframe pattern
acquired in PDCCH1

using subframe pattern
acquired in PDCCH2

PDCCH 1

PDCCH 2

time to apply
subframe pattern
acquired in PDCCH1

time to apply
subframe pattern
acquired in PDCCH2

# FIG. 12

PDCCH aggregation level 1

PDCCH transmission
starting position

PDCCH aggregation level 2

PDCCH transmission
starting position

PDCCH aggregation level 4

PDCCH transmission
starting position

PDCCH aggregation level 8

PDCCH transmission
starting position

# FIG. 13

PDCCH repetition level n

PDCCH transmission starting position
PDCCH transmission starting position
PDCCH transmission starting position
PDCCH transmission starting position
PDCCH transmission starting position

transmission period

transmission period

PDCCH repetition level m

PDCCH transmission starting position
PDCCH transmission starting position
PDCCH transmission starting position

# FIG. 14

PDCCH repetition level 1

PDCCH transmission starting position  PDCCH transmission starting position  PDCCH transmission starting position  PDCCH transmission starting position  PDCCH transmission starting position

PDCCH transmission starting position  PDCCH transmission starting position  PDCCH transmission starting position  PDCCH transmission starting position  PDCCH transmission starting position

PDCCH repetition level 2

PDCCH transmission starting position  PDCCH transmission starting position  PDCCH transmission starting position

PDCCH transmission starting position  PDCCH transmission starting position  PDCCH transmission starting position

# FIG. 15A

PDCCH aggregation level 1

PDCCH bundle transmission
starting position

PDCCH aggregation level 2

PDCCH bundle transmission
starting position

PDCCH aggregation level 4

PDCCH bundle transmission
starting position

PDCCH aggregation level 8

PDCCH bundle transmission
starting position

# FIG. 15B

PDCCH aggregation level 1

PDCCH bundle transmission
starting position

PDCCH aggregation level 2

PDCCH bundle transmission
starting position

PDCCH aggregation level 4

PDCCH bundle transmission
starting position

PDCCH aggregation level 8

PDCCH bundle transmission
starting position

EP 3 073 658 B1

# FIG. 16

PDCCH aggregation level 1

PDCCH bundle transmission
starting position

PDCCH aggregation level 2

PDCCH bundle transmission
starting position

PDCCH aggregation level 4

PDCCH bundle transmission
starting position

PDCCH aggregation level 8

PDCCH bundle transmission
starting position

EP 3 073 658 B1

# FIG. 17

MTC device#1

PDCCH bundle transmission
starting position

MTC device#2

PDCCH bundle transmission
starting position

MTC device#3

PDCCH bundle transmission
starting position

MTC device#4

PDCCH bundle transmission
starting position

MTC 기기#5

PDCCH bundle transmission
starting position

# FIG. 18

EP 3 073 658 B1

PDCCH aggregation level 2

PDCCH 1 PDCCH 2

PDCCH bundle transmission
starting position

PDCCH aggregation level 4

PDCCH1 PDCCH2 PDCCH3 PDCCH4

PDCCH bundle transmission
starting position

# FIG. 19A

PDCCH bundle transmission
starting position

# FIG. 19B

PDCCH bundle transmission
starting position

# FIG. 20

EP 3 073 658 B1

PDCCH aggregation level 2

PDCCH bundle
transmission
starting position

PDCCH bundle
transmission
starting position

PDCCH aggregation level 4

PDCCH bundle
transmission
starting position

PDCCH bundle
transmission
starting position

PDCCH bundle
transmission
starting position

PDCCH aggregation level 8

PDCCH
bundle
transmission
starting
position

PDCCH
bundle
transmission
starting
position

PDCCH
bundle
transmission
starting
position

PDCCH
bundle
transmission
starting
position

PDCCH
bundle
transmission
starting
position

# FIG. 21

# FIG. 22

EP 3 073 658 B1

$Y_k=b$ $Y_k=d$ $Y_k=b$ $Y_k=d$ $Y_k=b$ $Y_k=d$ $Y_k=b$ $Y_k=d$ $Y_k=b$ $Y_k=d$ $Y_k=b$ $Y_k=d$

$Y_k=a$ $Y_k=c$ $Y_k=a$ $Y_k=c$ $Y_k=a$ $Y_k=c$ $Y_k=a$ $Y_k=c$ $Y_k=a$ $Y_k=c$ $Y_k=a$ $Y_k=c$

transmission start position
of PDCCH bundle

# FIG. 23A

CCE index  0 1 2 · · · · · L

CCE for aggregation level 1    CCE for aggregation level 2    CCE for aggregation level 4    CCE for aggregation level 8

# FIG. 23B

UE 1

transmission start position
of PDCCH bundle

UE 2

transmission start position
of PDCCH bundle

UE 3

transmission start position
of PDCCH bundle

# FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2919402 A1

**Non-patent literature cited in the description**

- Discussion on (E)PDCCH and PUCCH coverage improvement for MTC UEs. *3GPP DRAFT, R1-135021*
- e)PDCCH Support for Coverage Deficit MTC Devices. *3GPP DRAFT, R1-135132*
- E)PDCCH coverage improvement for MTC UEs. *3GPP DRAFT, R1-135066*
- MTC Coverage improvement for Control Channels. *3GPP DRAFT, R1-135674*
- PDCCH transmission for MTC coverage enhancement. *3GPP DRAFT, R1-135461*
- PDSCH/PUSCH transmission for MTC coverage enhancement. *3GPP DRAFT, R1-135462*
- Evolved Universal Terrestrial Radio Access (E-UTRA); Physical Channels and Modulation (Release 10). *3GPP TS 36.211 V10.4.0,* December 2011
- Evolved Universal Terrestrial Radio Access (E-UTRA); Physical Channels and Modulation (Release 8). *3GPP TS 36.211 V10.4.0,* December 2011